# EUROPEAN PATENT APPLICATION

(11) **EP 4 586 512 A1**
(43) Date of publication of application: **16.07.2025**
(21) Application number: 25151165.5
(22) Date of filing: 10.01.2025
(51) Int. Cl.: H04B 7/024, H04W 72/27, H04W 84/12, H04B 7/0452, H04B 7/06, H04L 5/00

(54) **SETUP SEQUENCES FOR MULTI-ACCESS-POINT COORDINATED BEAMFORMING**

(30) Priority: 11.01.2024 IN 202421002187; 31.10.2024 US 202418933791
(71) Applicant: Avago Technologies International Sales Pte. Limited, Singapore 768923 (SG)
(72) Inventor: Sundaravaradhan, Srinath Puducheri, Irvine, 92618 (US); Fischer, Matthew J., Irvine, 92618 (US); Kondylis, George D., Irvine, 92618 (US); Su, Hang, Irvine, 92618 (US); Lin, Lekun, Irvine, 92618 (US); Porat, Ron, Irvine, 92618 (US); Verma, Sindhu, Irvine, 92618 (US); Adhikari, Shubhodeep, Irvine, 92618 (US)
(74) Representative: Dilg, Haeusler, Schindelmann Patentanwaltsgesellschaft mbH

(57) **Abstract**

Technical solutions providing setup sequences for multi-access point, AP, (205) coordinated beamforming, CBF. A system can include a first access point, AP, (205) configured to transmit, to a second AP (205) that is capable of participating in coordinated beamforming, CBF, a first notification frame comprising a first set of stations (230) of the first AP (205) to participate in a CBF transmission. The first AP (205) can be configured to receive, from the second AP (205), responsive to the first notification frame, a first response frame comprising a second set of stations (230) of the second AP (205) to participate in the CBF transmission. The first AP (205) can be configured to transmit data in the CBF transmission to at least one station of the first set of stations (230) or the second set of stations (230), responsive to the first response frame.

## Description

### CROSS-REFERENCE TO RELATED PATENT APPLICATIONS

This application claims the benefit of and priority to an Indian Provisional Application No. 202421002187, filed January 11^{th}, 2024, incorporated herein by reference in its entirety.

### FIELD OF THE DISCLOSURE

This disclosure generally relates to systems and methods for wireless communication between access points and wireless communication devices, including, without limitation communication reducing interference to unintended communication devices.

### BACKGROUND

Access points (APs), such as Wi-Fi routers, can facilitate wireless communication to any number of client wireless communication devices, also referred to as clients, stations or STAs, such as, smartphones, tablets, computers that can be within the wireless communication range of the APs. Sometimes, clients can experience interferences that can be caused by APs (e.g., within the same or a different wireless communication network) transmitting data to other clients or STAs. Such interferences can be exacerbated when network density is increased and transmission opportunities are reduced.

### SUMMARY OF THE DISCLOSURE

The technical solutions provide systems and methods facilitating coordination of beamforming with nulling of mutual interferences for wireless communications between multiple access points and their respective STAs. A coordinated beamforming (CBF) with nulling can be used to minimize interferences caused by APs to unintended recipient STAs when transmitting wireless communications destined for intended STAs. When one AP transmits data to a STA within its own wireless local area network (WLAN), this data transmission can interfere with communications of another STA of a different WLAN of another AP. Coordinated beamforming can be used arrange or coordinate beamforming of such transmissions by the APs to modify transmission patterns and reduce or eliminate the undesirable interference at the unintended STA recipients. However, it can be challenging for the APs and STAs to arrange, setup or coordinate these CBF operations between different APs and STAs, as CBF operations may depend on the capabilities of individual APs and STAs, which can vary widely, depending on their type and design. The technical solutions overcome such challenges by providing apparatuses, techniques, systems and methods for multi-access-point coordination of beamforming allowing the APs to configure their CBF operations to provide nulling of undesired interferences based on data gathered from various STAs of the APs involved.

At least one aspect of the technical solutions is directed to a system. The system can include a first AP that is configured, such as via instructions or data stored in memory and accessed and executed by one or more processors of the first AP. The first AP can be configured to transmit, to a second AP that is capable of participating in coordinated beamforming (CBF), a first notification frame comprising a first set of stations of the first AP to participate in a CBF transmission. The first AP can be configured to receive, from the second AP, responsive to the first notification frame, a first response frame comprising a second set of stations of the second AP to participate in the CBF transmission. The first AP can be configured to transmit data in the CBF transmission to at least one station of the first set of stations or the second set of stations, responsive to the first response frame.

The first AP can be configured transmit, to the second AP, a second notification frame comprising information of the first set of stations for constructing a preamble of the CBF physical-layer protocol data unit (PPDU). The first AP can be configured to receive, from the second AP, responsive to the second notification frame, a second response frame comprising information of the second set of stations to construct the preamble of the CBF PPDU to use for the CBF transmission. The first AP can be configured to construct the preamble of the CBF PPDU using the information of the first set of stations and the information of the second set of stations. The first AP can be configured to transmit the CBF transmission comprising the preamble of the CBF PPDU.

The first AP can be configured to identify at least one of downlink channel-state information (CSI) reported by one or more stations of the first AP or data traffic of the first AP for transmission to one or more stations of the first AP. The first AP can be configured to select, based on the identification, the first set of stations. The second set of stations of the first response frame can be selected based on at least one of a downlink channel-state information (CSI) reported by stations of the second set of stations or data traffic of the second AP pending for transmission.

The first AP can be configured to implement a channel sounding sequence with a plurality of stations associated with the first AP. The first AP can be configured to select, responsive to the channel sounding sequence, from the plurality of stations, the first set of stations. The second set of stations can be selected from a plurality of stations associated with the second AP based on one or more channel sounding sequences implemented by the second AP with the plurality of stations associated with the second AP.

The first AP can be configured to generate a first list identifying at least one of the stations of a first set of candidate stations of the first AP or a list of station groups constructed from at least one of a first set of candidate stations of the first AP or a second set of candidate stations of the second AP. The first AP can be configured to insert the first list into the first notification frame to indicate the first set of stations.

The first AP can be configured to insert, in the first notification frame, a first information for constructing a preamble for the CBF transmission. The first AP can be configured to receive, via the first response frame, a second information for constructing the preamble for the CBF transmission. The first AP can be configured to construct the preamble for the CBF transmission using at least the first information or the second information. The one or more channel sounding sequences can include at least one of a joint-sounding sequence or a sequential-sounding sequence.

The first AP can be configured to identify the information of the first set of stations that comprises at least one of: a parameter for a modulation and coding scheme (MCS) of at least a station of the first set of stations, a duration of a CBF PPDU, a parameter for a guard interval and long training field (GI-LTF), a number of long training fields (LTFs), information on fields of the first set of stations for the first AP, or a duration of a CBF transmission opportunity (CBF TXOP). The CBF transmission can be configured for transmission in accordance with a CBF transmission opportunity (TXOP) having a predetermined time interval, the first AP configured to transmit, to the second AP, information about the predetermined time interval of the CBF TXOP.

An aspect of the technical solutions are directed to a method. The method can include a first access point (AP) transmitting, to a second AP that is capable of participating in coordinated beamforming (CBF), a first notification frame comprising a first set of stations of the first AP to participate in a CBF transmission. The method can include receiving, by the first AP from the second AP, responsive to the first notification frame, a first response frame comprising a second set of stations of the second AP to participate in the CBF transmission. The method can include transmitting, by the first AP, data in the CBF transmission to at least one station of the first set of stations or the second set of stations, responsive to the first response frame.

The method can include transmitting, by the first AP to the second AP, a second notification frame comprising information of the first set of stations for constructing a preamble of the CBF physical-layer protocol data unit (PPDU). The method can include receiving, by the first AP from the second AP, responsive to the second notification frame, a second response frame comprising information of the second set of stations to construct the preamble of the CBF PPDU to use for the CBF transmission. The method can include constructing, by the first AP, the preamble of the CBF PPDU using the information of the first set of stations and the information of the second set of stations. The method can include transmitting, by the first AP, the CBF transmission comprising the preamble of the CBF PPDU.

The method can include identifying, by the first AP, at least one of downlink channel-state information (CSI) reported by one or more stations of the first AP or data traffic of the first AP for transmission to one or more stations of the first AP. The method can include selecting, based on the identification, the first set of stations, wherein the second set of stations of the first response frame is selected based on at least one of a downlink channel-state information (CSI) reported by stations of the second set of stations or data traffic of the second AP pending for transmission.

The method can include implementing, by the first AP, a channel sounding sequence with a plurality of stations associated with the first AP. The method can include selecting, by the first AP, responsive to the channel sounding sequence, from the plurality of stations, the first set of stations, wherein the second set of stations is selected from a plurality of stations associated with the second AP based on one or more channel sounding sequences implemented by the second AP with the plurality of stations associated with the second AP.

The method can include generating, by the first AP, a first list identifying at least one of the stations of a first set of candidate stations of the first AP or a list of station groups constructed from at least one of a first set of candidate stations of the first AP or a second set of candidate stations of the second AP. The method can include inserting, by the first AP, the first list into the first notification frame to indicate the first set of stations.

The method can include inserting, by the first AP, in the first notification frame, a first information for constructing a preamble for the CBF transmission. The method can include receiving, by the first AP, via the first response frame, a second information for constructing the preamble for the CBF transmission. The method can include constructing, by the first AP, the preamble for the CBF transmission using at least the first information or the second information. The one or more channel sounding sequences include at least one of a joint-sounding sequence or a sequential-sounding sequence.

The method can include identifying, by the first AP, the information of the first set of candidate stations, the information of the first set of stations comprising at least one of: a parameter for a modulation and coding scheme (MCS) of at least a station of the first set of stations, a duration of a CBF PPDU, a parameter for a guard interval and long training field (GI-LTF), a number of long training fields (LTFs), information on fields of the first set of stations for the first AP, or a duration of a CBF transmission opportunity (CBF TXOP).

An aspect of technical solutions is directed to a system. The system can include a second access point (AP) configured to receive, from a first AP that is capable of participating in coordinated beamforming (CBF), a first notification frame comprising a first set of stations of the first AP to participate in a CBF transmission. The second AP can be configured to transmit, to the first AP, responsive to the first notification frame, a first response frame comprising a second set of stations of the second AP to participate in the CBF transmission. The second AP can be configured to transmit data in the CBF transmission to at least one station of the first set of stations or the second set of stations, responsive to the first response frame.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGs. 1B and 1C are block diagrams depicting computing devices useful in connection with the methods and systems described herein, according to some embodiments.
FIG. 2 illustrates an example system of coordinated partial rank nulling in a multiple AP and multiple STA environment, according to some embodiments.
FIG. 3 is an example plot of a signal-space of a STA transmission in the context of a single AP partial-rank nulling.
FIG. 4 is an example plot of two signal-spaces two STA transmissions in the context of 2 AP coordinated partial-rank nulling.
FIG. 5 is an example block diagram of a system for a multi-access-point coordination of CBF with nulling of mutual interferences.
FIG. 6 is an example flow diagram of a method for providing a multi-AP coordination of CBF.
FIG. 7 is an example flow diagram of a method for identifying and exchanging station information between APs.
FIGS. 8-12 are example flow diagrams of methods for providing example CBF set up sequences for a plurality of APs and their associated stations.

The details of various embodiments of the methods and systems are set forth in the accompanying drawings and the description below.

### DETAILED DESCRIPTION

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} draft version D3.0 standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein;
- Section B describes coordinated partial-rank nulling in multi-AP transmissions; and
- Section C describes a multi-access-point coordination for nulling of mutual interferences

### A. Computing and Network Environment

Prior to discussing specific embodiments of the present solution, it can be helpful to describe aspects of the operating environment as well as associated system components (e.g., hardware elements) in connection with the methods and systems described herein.

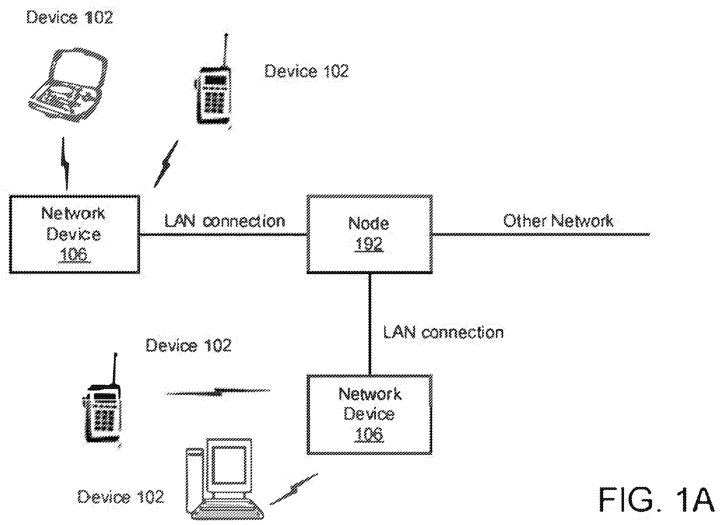

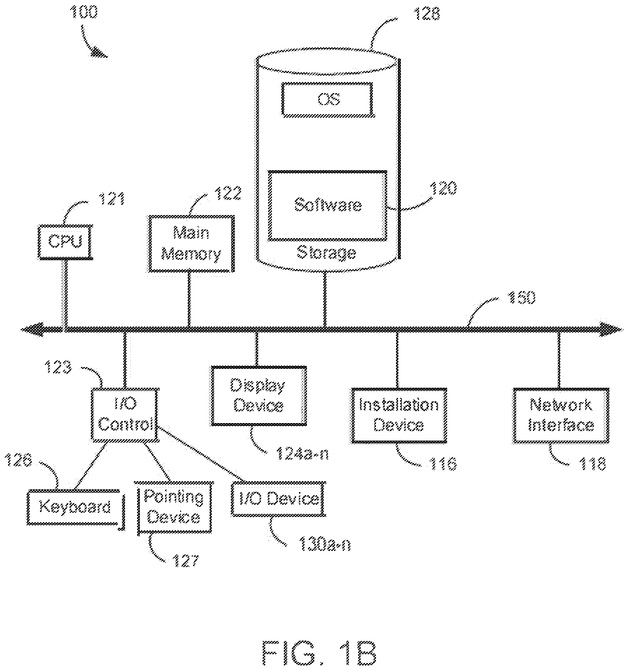

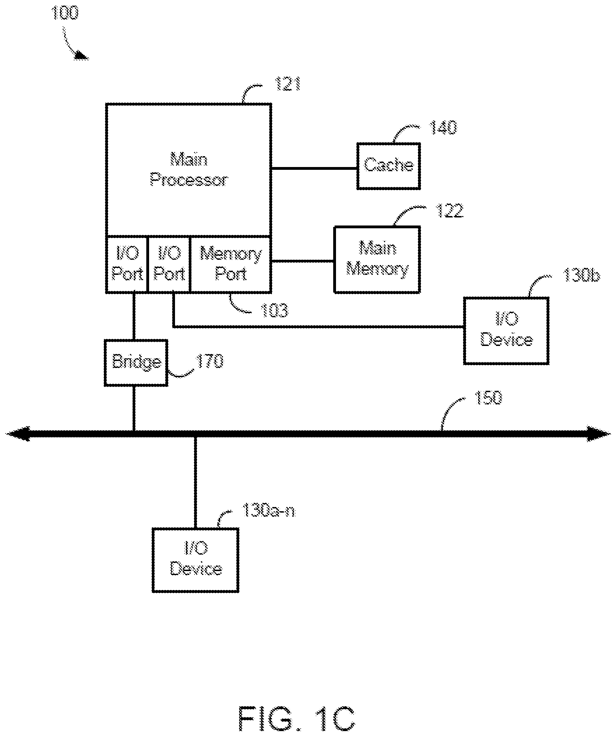

Referring to FIG. 1A, an embodiment of a network environment is depicted. In brief overview, the network environment includes a wireless communication system that includes one or more access points (APs) or network devices 106, one or more stations, also referred to as STAs or wireless communication devices 102 and a network hardware component or network hardware 192. The wireless communication devices or STAs 102 can for example include laptop computers, tablets, personal computers, and/or cellular telephone devices. The details of an embodiment of each station or wireless communication device 102 and AP or network device 106, such as their internal hardware and software configurations, can be described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 or APs can include, for example, Wi-Fi devices providing WLANs, or 5G base stations for providing cellular networks. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless fidelity (Wi-Fi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to, and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Coordinated partial-rank nulling in multi AP Transmissions

When an APs transmits data to a particular intended recipient STA within its own basic service set (BSS), other STAs within the same, or a neighboring BSSs (e.g., other WLANs) can be within the range of the transmitting AP and experience interference. Interference can include any undesired disruption or degradation of a signal, communication, or system caused by the presence of an external signal, noise, or other factors that interfere with the intended transmission or reception of information. Interference can include unwanted signal disruption caused by transmissions from one access point (AP) affecting the communication between another AP and its associated stations (STAs), which CBF can mitigate by adjusting transmission patterns to minimize signal overlap with the unintended STA recipients. For instance, when transmissions destined for different STAs simultaneously occur on the same channels, interferences caused by the transmissions can be difficult to resolve as the information from one or more of the transmissions may be unknown and a relationship between the transmissions may be unknown. Such interferences can cause latencies, delays or dropped network packets, making data transmissions within such networks more difficult, adversely affecting user experience.

The technical solutions of the present disclosure overcome these challenges by providing or facilitating a multi-AP coordinated beamforming with nulling (CBF). The CBF can include any technique or an approach in which multiple APs collaboratively adjust their beamforming patterns to deliver their signals or transmissions to the intended stations while minimizing or canceling interference from such signals or transmissions at unintended stations. For instance, the APs from different BSSs (e.g., WLANs) can use CBF to configure their transmissions to be sent along spatial directions or vectors at which interferences from those APs are minimized at unintended recipient STAs or clients. The technical solutions can include client devices (STAs), receiving spatial streams from the APs of their respective networks. A network, such as a WLAN of a particular AP, can include one or more basic service sets (BSS) having an AP and one or more STAs configured for wireless communication via the same AP, such as by being configured to the local WLAN of the AP. As APs may transmit any number of data streams to any number of STAs within their BSS, STAs for which the data stream is not intended may be within the wireless communication range of the transmitting AP and experience interference. The technical solutions of the present disclosure can utilize spatial orientations of the unintended STA recipients and beamforming functionalities of the APs to transmit data streams to their intended STAs along the spatial orientations at which these transmissions are partially nulled at the unintended recipient locations. In doing so, the technical solutions of the present solution allow multiple APs to communicate at the same time and frequency (e.g., simultaneous transmissions on the same channel), while avoiding interferences, thereby increasing throughput of the transmissions, decreasing latency and minimizing the spectrum use to avoid interference.

Technical solutions of the present disclosure can include systems and methods of multi-AP coordinated-beamforming (CBF) with nulling to facilitate coordinated partial-rank nulling in multi-AP transmissions. CBF with nulling can include one of the candidate features being considered for the next-generation Wi-Fi standard (UHR, 11bn). Nulling can include any reduction or cancellation on unwanted signals or interference at a receiver, such as by adjusting the phase and amplitude of incoming signals. Nulling can include a technique in which an AP minimizes interference experienced by a STA by selectively reducing the strength or power of unwanted signals from other sources. Nulling can include a technique in which a system can combine a signal with another signal in order to create a null (e.g., cancel out the original signal. Nulling can be utilized or included to minimize an AP interference seen by a STA due to the AP's transmissions to other STAs (either in the same or different BSS as the first STA).

Partial-rank nulling, sometimes also referred to as partial nulling, can include an AP minimizing (e.g., reducing below an acceptable threshold) interference in a smaller number of dimensions or directions than what a STA can receive. For instance, partial-rank nulling can include a technique for minimizing or reducing an unwanted signal or an interference (e.g., to below an acceptable threshold level) without completely eliminating the interference. For example, if a STA has two receive-antennas (i.e., can receive signals in two dimensions or directions), partial-rank nulling can minimize interference along only one dimension or direction as seen by the STA. The present solution can provide a mechanism of coordinated partial-rank nulling that minimizes the interference at a STA, with both its self-BSS as well as other-BSS (OBSS) in which APs transmit communications concurrently. The technical solutions can also include AP-coordination mechanisms to achieve the above partial-rank nulling.

Partial-rank nulling with self-BSS and other-BSS access points can be implemented in wireless communication systems. For example, in a multiuser multiple-input multiple-output (MU-MIMO) system, partial-rank nulling can be used to improve the overall system performance by mitigating interference between multiple communication devices. For example, multiple devices can simultaneously transmit and receive data via their antennas. Due to the spatial proximity between the devices, interferences can occur between different devices. Interferences can degrade the performance of the system, leading to lower data rates and reduced overall capacity. Partial-rank nulling with self BSS and other-BSS access points can address this issue by selectively nulling interferences at unintended recipient STAs.

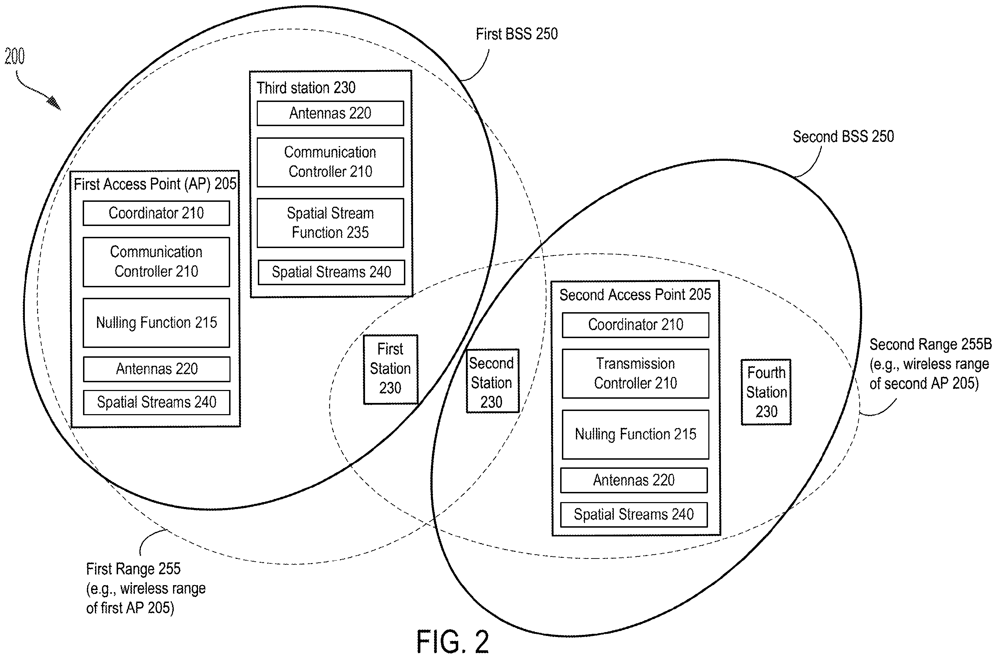

Referring now to FIG. 2, an example of a system 200 for implementing a coordinated partial-rank nulling with multi-AP transmissions is illustrated. System 200 can include one or more access points (APs) 106 (e.g., Wi-Fi routers) providing transmissions to stations or STAs 102 within their BSSs 250. APs 106 can also have wireless transmission ranges 255 that can include STAs 102 outside of their BSS (e.g., STAs not configured to the WLANs of the respective APs, but still capable of receiving transmissions or interferences from those APs).

FIG. 2 can include a first AP 106 having a first BSS 250 including first station 102 and a second station 102, as well as a second AP 106 having a second BSS 250 including a second station 102 and a fourth station 102. Each of the first and second APs 106 can include one or more coordinators 205, communication controllers 210, nulling functions 215, antennas 220 and spatial streams 240. Each of the STAs 102 (e.g., first, second, third and fourth stations 102 in system 200) can include one or more antennas 220, communication controllers 210, spatial stream functions 235 and spatial streams 240. In addition to the STAs 102 within their own BSSs 250, each of the APs 106 can also have a wireless signal range 255 which can cover or include the STAs 102 of their own BSS 250, but also STAs 102 that are outside of their BSS 250. For example, in addition to the first and third STAs 102, the first range 255 of the first AP 106 can include the second STA 102 (e.g., from the BSS of the second AP 106). Similarly, in addition to the second and fourth STAs 102, the second AP 106 can have a second signal range 255 that can include the first STA 102 (e.g., from the BSS of the first AP 106)

FIG. 2 can illustrate an environment in which APs 106 can coordinate their transmissions according to their prior-negotiated and configured partial-rank nulling. For instance, system 200 can be used to provide single-AP partial-rank nulling (e.g., partially nulling interferences to non-recipient STAs within the BSS of the transmitting AP) and multi-AP partial-rank nulling (e.g., partially nulling interferences to non-recipient STAs within the same or a different BSS with respect to the transmitting AP).

AP 106 can include any combination of hardware and software that allows wireless communication devices, such as STAs 102, to connect wirelessly to a wired network or world wide web or internet. AP 106 can include any combination of hardware and software for facilitating wireless communication within a WLAN of the AP for any STAs 102 that are included in its BSS 250. APs 106 can include one or more communication devices, such as Wi-Fi routers, switches, Bluetooth hubs, cellular network base stations and can utilize any wireless communication protocols or standards, such as 802.11 for wireless communication.

APs 106 and STAs 102 can be configured for wireless communication in wireless communication networks, such as a LAN, WAN or a cellular network. For example, each AP 106 can include, be associated with, be coupled with, provide or facilitate a communication network, such as WLAN of a Wi-Fi for any clients or stations 102 of its own basic service set (BSS).

BSS 250 is a term to identify a collection of stations (e.g., devices) that are associated with the same wireless access point within a WLAN. For instance, BSS can identify a set or collection of one or more stations and/or one or more APs that communicate together within a wireless network. BSS 250 can include one or more APs and client devices (e.g., STAs 102) coupled to the AP within a particular coverage area, such as a range 255. BSS 250 can provide an infrastructure for the AP 106 to provide network communication to STAs 102 within its frequency coverage area. Within a BSS 250, an AP 106 can manage data distribution to various connected devices (e.g., STAs 102), facilitate implementation of security protocols or functions and roaming as STAs 102 may move in and out of its coverage area (e.g., range 255). Range 255 can include an area to which signals from the AP 106 can reach to recipient STAs 102. Range 255 can include STAs 102 that are within the BSS 250 of the given AP 106 or STAs 102 that are a part of BSS 250 of another AP 106, such as for example, first STA 102 which is a part of the first BSS 250 of the first AP 106, but also within a second range 255 of the second AP 106 servicing second and fourth STAs 102 of the second BSS 250.

Coordinator 205 can include any combination of hardware and software for coordinating communications between APs 106 and/or STAs 102. Coordinator 205 can include functionality (e.g., applications, computer code or programs) facilitating coordination of communication (e.g., transmissions) between APs 106 and STAs 102 or among APs 106. Coordinator 205 can include functionality for implementing a coordination phase to identify STAs 102 for which interference needs to be wholly or partially nulled and exchanging STA 102 information between APs 106. Coordinator 205 can include functionality for coordinating timing and frequencies, such as exchanging timing and frequencies information (e.g., communication bands or channels) between APs 106. Coordinator 205 can generate, facilitate, implement and apply settings or configurations to APs 106 and/or STAs 102 to facilitate coordinated partial-rank nulling.

Coordinator 205 can include a precoder functionality, such as a precoder algorithm for computing beamforming vectors for each STA 102 to achieve partial-rank nulling. Precoder can include a functionality for computing directions or vectors for beamforming transmissions to STAs 102. Precoder can include a functionality for utilizing information or data on directions or vectors at the STAs 102 at which interference is minimized or reduced below a threshold for acceptable level of interference (e.g., partial-rank nulling is achieved) to determine directions or vectors for beamforming transmissions to perform partial-rank nulling at such STAs 102.

Coordinator 205 can include the functionality to perform channel-sounding to STAs 102. For example, coordinator 205 can facilitate, instruct or request each STA to measure one or more MIMO channels for each sounding AP and provide measurements back to the coordinator 205. The relative phase-offsets across receive antennas 220 for the STA 102 can be maintained at constant values when measuring channels for different APs 106. Coordinator 205 can exchange with the STAs 102 estimates of the MIMO channel for a sounding AP (e.g., via a compressed beamforming report format (CBR), as provided in 802.11, or in Cartesian form). Coordinator 205 can exchange information for interfering APs 106 (e.g., APs 106 from external BSSs 250), such as when STAs 102 provide linear transformation of the MIMO channel from that particular interfering AP 106. The linear transformation can be determined using previously measured MIMO channel between the STA and its own AP 106 (e.g., AP 106 of STA's BSS 250). For example, linear transformation of the MIMO channel could represent projection onto one or more eigen-models of the MIMO channel measured between the STA and the AP 106 of STA's own BSS. For example, coordinator 205 can exchange (e.g., receive) set of directions in which an AP 106 is to minimize interference if the STA is receiving a particular number of intended spatial streams from its own AP 106 (e.g., AP 106 from STA's own BSS 250).

Coordinator 205 can include the functionality for facilitating or performing channel-sounding to STAs 102. Channel sounding can include transmitting signals and receiving, in response, characteristics, such as signal strength, delay and phase, and then using such received characteristics determine the quality of the communication channels. Coordinator 205 can transmit (e.g., individually or jointly with APs 106 of other BSSs 250) one or more null-data-packets (NDPs). NDPs can be synchronized in time and/or frequency (e.g., between multiple APs 106 performing simultaneous channel sounding). The number of sounding dimensions in the NDP can include a total number of antennas across the APs. Jointly transmitted NDPs can be preceded by one or more NDP announcement (NDPA) frames. For example, an AP 106 can transmit an NDPA on behalf of all APs 106 performing channel sounding to all the STAs 102 being sounded. For example, each of the APs 106 sends an NDPA sequentially to their own STAs 102. For example, all APs 106 transmit their NDPAs at the same time but separated in frequency (e.g., via OFDMA) with each AP 106 addressing the STAs 102 within its own BSS 250. For example, coordinator 205 can provide or facilitate trigger frames transmitted by the AP 106, based on which all the APs 106 participating in channel sounding can synchronize their carrier frequency offsets (CFOs) and the start time of their coordinated transmissions.

Communication controllers 210 can include any combination of hardware and software for implementing wireless communications between APs 106 and STAs 102. Communication controller 210 can include the functionality for providing and transmitting data (e.g., spatial streams) to the intended STAs 102. Communication controller 210 can transmit messages to STAs 102, such as inquiring about information, data or description of directions or vectors in which interferences are to be minimized at each STA 102. Communication controller 102 can include the functionality for configuring for transmission features of the AP 106 to perform and implement the transmissions of the spatial streams 240 in accordance with partial-rank nulling. For instance, communication controller 210 can configure antennas 220 and any other settings to facilitate or implement transmissions of spatial streams 240 according to the specific directions or vectors (e.g., as determined by the coordinator 205), to implement partial-rank nulling at the specific STAs 102. Communication controller 210 can control, manage and implement the transmissions (e.g., communications) in accordance with the timing and frequency (e.g., selected channels or bands), as well as in directions or vectors in which partial-rank nulling is implemented.

APs 106 and/or STAs 102 can include communication controllers 210 to facilitate wireless communications with each other. Communication controllers 210 can include and/or utilize wireless communication interfaces, such as hardware and software, including transceivers, antennas, RF interfaces, ports and processing devices facilitating communications via standards, such as 802.11a/b/g/n/ac/ax, Bluetooth, Cellular (e.g., 3G, 4G, 5G), Zigbee, Z-Wave, NFC and others. Communication controllers 210 can control receiving and transmission of signals, data, or messages to facilitate or implement the multi-AP transmissions using coordinated partial-rank nulling.

APS 106 can include nulling functions 215 for implementing nulling or partial-rank nulling per coordinated (e.g., agreed upon) communications between the APs 106. Partial-rank nulling can include any technique or action in array signal processing for suppressing interference from signals from specific directions while preserving signals arriving from other directions. For example, partial-rank nulling can include manipulating the array response to create nulls or zeros in the radiation pattern in interference from a particular direction. Nulling function 215 can include any combination of hardware and software for reducing or cancelling unwanted signals or interference at a receiver (e.g., STA 102), such as by adjusting the phase and amplitude of incoming signals. Nulling function 215 can include any combination of hardware and software for minimizing or reducing an unwanted signal or an interference (e.g., to below an acceptable threshold level), such as without completely eliminating the interference.

Nulling function 215 can include the functionality to measure interference from a particular AP 106 from various receive vectors or directions with respect to the STA 102. Direction can include any path or course along which the transmission signal is moving, oriented, or pointing (e.g., as a vector), and can be specified by its position relative to a reference point or object, such as an AP and/or STA. Nulling function 215 can identify or use measured signals (e.g., sounding signals) from multiple angles, directions or vectors and identify the angle, direction or vector from, along or at which the interference is the lowest or below an acceptable threshold. Nulling function 215 can include or utilize a precoder, such as residing within coordinator 205, to determine the direction or angle along which the interference is lowest or reduced below a threshold (e.g., partial rank nulling). Nulling function 215 can then select the direction, angle or vector corresponding to the lowest interference as the direction at which the signal from that AP 106 is to be partially nulled.

APS 106 and stations 102 can include antennas 220. Antennas 220 can include any transmission or receive antennas. Antennas 220 can include, or be coupled with, communication chains and/or transceivers implementing the communication, including chains of circuitry (e.g., amplifiers, filters, analog to digital and/or digital to analog converters, processors, signal combiners and other circuitry to facilitate signal transmission or receipt.

APs 106 and stations 102 can communication spatial streams 240 (e.g., spatial streams M of an AP 106 intended for a particular STA 102, or a total number of spatial streams N transmitted by an AP 106). Spatial stream 240 can include any data stream transmitted or received through a separate antenna in a MIMO wireless communication system. For instance, a spatial stream can be transmitted or received on more than one antenna, and multiple spatial streams may share the same set of antennas. For example, each spatial stream when transmitted over multiple antennas can use a unique beamforming vector, which can be different from the vectors used for other spatial streams transmitted over the same set of antennas. Spatial streams 240 can provide or facilitate improved throughput and reliability by using multiple antennas to create distinct data paths. Spatial streams 240 can be suitable for directional control and transmissions with partial-rank nulling.

System 200 can include or use any number of spatial streams 240, including any independent data streams transmitted simultaneously over multiple antennas in a MIMO (Multiple-Input Multiple-Output) system. System 200 can include STAs 102 that can be configured for communicating a wireless network (e.g., WLAN of a BSS 250) to receive and transmit data. System 200 can allow a STA 102 to receive multiple spatial streams 240 simultaneously via one or more receive antennas 220 (e.g., two receive antennas for each STA 102). Each spatial stream 240 can represent an independent data stream transmitted from an AP 106 that can minimize the interference in a number of dimensions/directions. The number of dimensions or directions in which the partial-rank nulling can reduce the interference can be smaller than the number of spatial streams 240 that a STA 102 can receive. For example, if a STA has two receive antennas 220 (e.g., can receive signals in two dimensions or directions), partial-rank nulling can minimize interference along one dimension or direction as seen by the STA 102.

The number of spatial streams 240 that a STA 102 can support can vary based on the capabilities and the MIMO configuration of the network. For example, if a STA 102 has multiple receive antennas 220 and the network is configured for 2x2 MIMO, then STA 102 can receive two spatial streams 240 simultaneously. Each spatial stream 240 can carry independent data, effectively increasing the data capacity and improving the overall throughput, data rates, increased system capacity, and/or wireless network reliability.

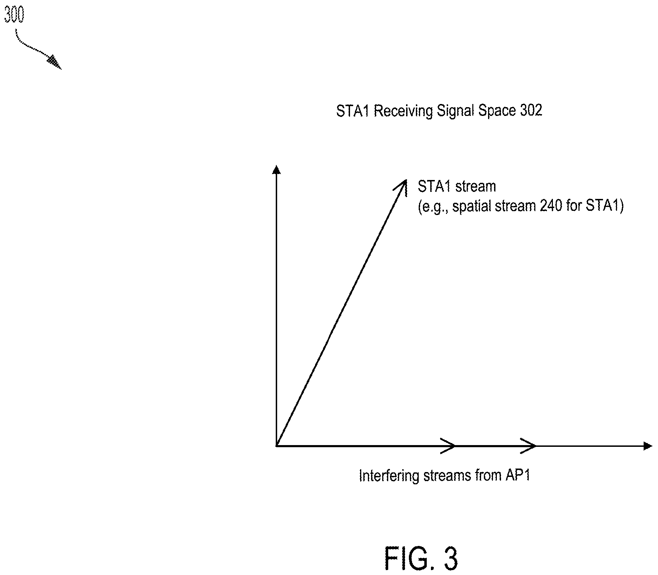

Referring now to FIG. 3, an example of a plot 300 of a signal-space 302 for received transmissions by a STA 102 in an aspect of the technical solution. As shown in plot 300, station 102 (e.g., STA1) having a total of K=2 receive antennas 220 can receive a total number of N=3 spatial data streams 240 transmitted by an AP 106 (AP1). STA1 can be within the BSS 250 of the transmitting AP1 106 and can receive all of 3 spatial data streams 240 transmitted by AP1, even though only one of those spatial data streams 240 are intended for STA1.

For example, AP1 can transmit N=3 spatial streams 240 via a down link (DL) MU-MIMO to multiple STAs 102 within its BSS 250. Of the N=3 total spatial data streams 240 transmitted by AP1, M=1 streams (e.g., a single spatial data stream 240, where M<N) can be intended for STA1. While plot 300 shows STA1 stream (e.g., the stream intended for STA1) directed at an angle away from the X axis, the remaining two spatial data streams 240 (e.g., interfering streams from AP1) are directed along the X-axis. The Y-axis (which is orthogonal or perpendicular to the X-axis) can represent the direction or vector on the signal space 302 of the STA1 along which transmissions are nulled or partially nulled. Accordingly, STA1 stream (being directed at least partially along the Y-axis) can have an interference below a threshold in at least one direction and can therefore be received by the STA1. For example, STA1 stream can be free from interference at least in one direction.

In the example of FIG. 3, receiving station 102, such as the STA1, can have any number of K receive-antennas 220, such that M < K < N, where M corresponds to a total number of data streams intended for the receiving station 102 and N corresponds to a total number of data streams transmitted by the AP 106 to any number of recipients. In plot 300 example, N = 3, M = 1 and K = 2. In such a scenario, for STA1 102 to be able to decode its own M intended spatial-streams 240, AP1 106 can beamform the transmitted spatial-streams such that the signal strength from the interfering streams (e.g., N-M=2 streams aligned with the X-axis) have their signals at the STA1 minimized over a set of M linearly-independent directions as received at STA1 102. M intended streams 240 can be recovered by STA1 102 by projecting them away from the X-axis, as shown by STA1 stream.

AP1 106 can include appropriately constructed long-training fields (LTFs) in its transmissions so that STA1 102 can estimate both i) the directions of its M intended streams, as well as (ii) the M distinct directions in which the interference is minimized. The technical solution can include or provide a framework for a scenario in which any number of APs 106 performing partial-rank nulling towards any number of STAs 102. For instance, when two APs 106 are utilized, prior to implementing coordinated-transmissions, a first AP 106 (e.g., AP1) and a second AP 106 (e.g., AP2) can execute a coordination (e.g., during a coordination phase) in which messages can be exchanged between AP1 and AP2 to identify each receiving STA for which the interference is to be fully or partially nulled. For example, the APs 106 can identify a STA 102 with more receive antennas than its intended spatial streams (e.g., antennas K=2, while received streams N = 10, of which only M=1 is intended for the STA).

Such identified STA can include an interference seen from the OBSS AP to be significant enough to include nulling (e.g., STA can have interference signal strength or power that is above a particular threshold). For example, the threshold can include a level of the background signal noise, or a factor of 2, 3, 4, 5, 10 or more of the level of the background noise. The threshold can be, for example, defined in reference to other signals, such as signal strengths, amplitude or power of received intended streams (e.g., 1/2, 1/3, 1/4, or 1/8 of the intended received spatial stream's signal strength, amplitude or power).

For each STA that is identified to have its interfering streams be partially nulled, the AP1 and AP2 can identify a set of linearly independent receive-directions in which the interference from both APs is to be minimized. Linearly independent receive directions can include distinct and non-correlated paths, directions or channels through which signals can be received by multiple receive antennas 220. AP1 and AP2 can change such a set of directions dynamically from one coordinated transmission to the next depending on: i) other receiving STAs, as well as ii) the number of spatial streams intended for each STA.

Once the set of directions are identified, the AP1 and AP2 can commence coordinated transmission that is synchronized in both time and frequency. For instance, out of a total number N1 spatial streams transmitted from AP1, a subset of M1 spatial streams can be intended for STA1 having a K1 number of receive-antennas. The configuration can include M1 spatial streams intended for STA1 that is less than the number of K1 receive-antennas and which are also less than the total number of N1 spatial streams from the AP1 (e.g., M1 < K1 < N1). Likewise, of the N2 streams transmitted from AP2, M2 streams can be intended to STA2 having K2 receive-antennas can be such that M2 < K2 < N2. In such a configuration, both STA1 and STA2 can be selected, determined or configured to have partial-rank nulling implemented upon them by the AP1 or AP2. AP1 or AP2 can coordinate their data stream transitions in time and frequency, using beamforming to directions at which partial-rank nulling is to be performed to reduce interference and allow simultaneous transmissions.

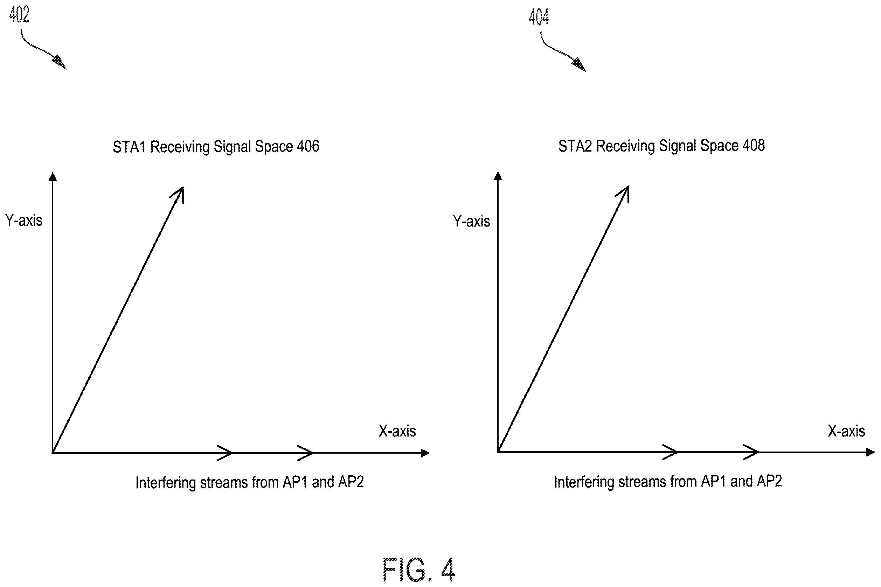

Referring now to FIG. 4, example plots 402 and 404 are illustrated of receiving signal spaces 406 of STA1 and 408 of STA2 which are recipients of transmissions by AP1 and AP2 implementing coordinated partial-rank nulling in a multi-AP transmission example. FIG. 4 can correspond to an instance in which the present technical solutions utilize two APs 106, such as those illustrated in FIG. 2. APs 106 can apply appropriate beamforming vectors to their respective spatial streams 240 to transmit streams at least along the specified directions or vectors as received by the intended STAs, such that the same streams will be partially or fully nulled along the specified directions at the unintended receiving STAs. For example, the beamforming vectors applied to spatial streams can be such that the interference from both AP1 and AP2 is minimized over a set of M1 independent receive-directions at STA1 as pre-agreed during the coordination phase. The M1 intended streams for STA1 can be recovered by projecting the streams in such determined M1 directions. For example, the same can be applied for STA2, with a corresponding set of M2 directions for the STA2. The AP1 and AP2 can include appropriately constructed long-training fields (LTFs) in the coordinated-transmission so that STA1, STA2 can estimate both i) the directions of their respective intended streams, as well as (ii) the directions in which the interference from AP1 and AP2 is minimized.

AP1 and AP2 can each transmit a total number of N = 2 spatial streams 240 of which only M = 1 spatial stream 240 is intended for receipt by the STA 102 of the respective transmitting AP 106's own BSS 250, where each receiving STA 102 includes K =2 receiving antennas 220. For example, for STA1, the remaining one spatial stream from AP1 and both spatial streams from AP2 can produce interference to be partially nulled. As illustrated, a total of 3 spatial streams are partially nulled (e.g., aligned with X-axis or X direction in FIG. 4).

As shown in plot 402, interfering streams 412 from AP1 and 414 and 416 from AP2 are directed along the X direction of STA1 receiving signal space 406, and are eliminated or minimized along the Y direction, while intended stream 410 of AP1 is directed along a different direction (e.g., closer to, or more closely aligned with, the Y direction) and therefore is not eliminated or minimized along the Y-axis or Y direction and received by STA1. For example, Y-axis, also referred to Y direction, can be orthogonal or perpendicular to the X-axis, also referred to as X direction. For example, STA1 receiving signal space allows for intended spatial streams to be received at STA1 when such streams have a component in Y direction that is greater than a threshold. For example, the threshold can up to 5% of the total received signal strength of the intended spatial stream. For example, the threshold can be up to 5%, 10%, 15%, 20%, 30% or greater than 30%, depending on the design.

Similarly, as shown in plot 404, interfering streams 410 and 412 from AP1 and 416 from AP2 are directed along the X direction of STA2 receiving signal space 408, and their signals are also minimized or eliminated along the Y direction, while intended stream 414 from AP2 is directed along a different direction (e.g., closer to, or more closely aligned with, the Y-axis) and therefore is not eliminated or minimized along the Y direction and received by the STA2. In some implementations, AP1 and AP2 can transmit streams 410, 412, 414 and 416 simultaneously in the presence and range of STA1 and STA2 and interferences and non-interferences of the streams can occur at the same time. Accordingly, the AP1 and AP2 can simultaneously and in a coordinated fashion (e.g., at the same time and frequency) transmit spatial streams to their own respective STAs 102, using partial-rank nulling to prevent interferences to non-intended STAs 102.

In one example, as a part of the coordination phase, the APs 106 (e.g., AP1 and AP2) can exchange information on the precoder-algorithm to be used in computing the beamforming vectors for each STA 102 (e.g., STA1 and STA2) to achieve partial-rank nulling. For example, as a part of the coordination phase, the APs 106 can exchange information, data or description of the direction-vectors in which interference is to be minimized at each STA's receiving antennas 220. For example, as a part of the coordination phase, a single AP 106 can compute the beamforming vectors for all the spatial streams and shares these with the other participating APs.

Using the information exchanged in the coordination phase, the receive-directions in which to minimize interference for each STA 102 can be determined or generated based on, or using, policies, such as policies specified in the standard. The choice of the policy can be fixed as a "default" implementation or can be decided based on the capabilities of the APs 106 and/or the STAs 102. For example, a policy can include for a STA receiving M intended spatial-streams from the AP 106 of its own BSS 250, an interfering AP 106 minimizing interference along the M directions at that STA's receiver corresponding to the M strongest eigen-modes of the channel between the STA 102 and its AP 106 (e.g., AP 106 of STA's own BSS 250). For example, a policy can include, for a STA receiving M intended spatial-streams from the AP of STA's own BSS, an interfering AP 106 minimizing interference along the M directions at that STA's receiver that correspond to the M strongest eigen-modes of the channel between the STA 102 and the interfering AP 106.

For example, as a part of the coordination phase, AP1 and AP2 can each perform channel-sounding to STA1 and STA2. Each STA 102 can measure the MIMO channel from each sounding AP 106 and can provide a response including the measurements. The relative phase-offsets across receive antennas for a STA 102 can be maintained at constant values when measuring channels from different APs.

During the coordination phase, different independent variants and their combinations can be implemented. For example, a STA 102 can feed back estimates of the MIMO channel from a sounding AP in a compressed-beamforming report format (CBR), such as the one defined in 802.11. For example, a STA 102 can feed back estimates of the MIMO channel from a sounding AP in Cartesian-form. For example, for an AP 106 from another BSS 250 than the BSS 250 of the STA, (e.g., an interfering AP), STA 102 can feed back a linear transformation of the MIMO channel from that AP 106. The linear transformation can be determined by the previously measured MIMO channel between the STA and its self-BSS AP. For example, linear-transformations could represent projection onto one or more eigen-modes of the MIMO channel measured between the STA 102 and its self-BSS AP 106. For example, for a sounding AP 106, a STA 102 can feed back the preferred set of M directions in which the corresponding AP can minimize interference if the STA 102 is receiving M intended spatial streams from its self-BSS AP 106.

As part of the coordination phase, the APs 106 (e.g., AP1 and AP2) can jointly perform channel-sounding to STAs 102. APs 106 can jointly transmit a null-data-packet (NDP) which can be synchronized in time/frequency. The total number of sounding dimensions in the NDP can equal to the total number of antennas 220 across the APs 106. The jointly transmitted NDP can be preceded by one or more NDP announcement (NDPA) frames. For example, a single AP 106 can transmit an NDPA on behalf of all the APs, to STAs across BSS 250 that are to be sounded. For example, all the APs 106 cam transmit their NDPAs sequentially, with each AP's NDPA addressing the STAs 102 within their own BSS 250. For example, all APs 106 can transmit their NDPAs at the same time, but separated in frequency (e.g., via OFDMA), with each AP 106 addressing the STAs 102 within their own respective BSSs 250. The coordinated transmission can be preceded by a trigger frame transmitted by one of the APs 106. Based on the trigger frame, all the participating APs 106 can synchronize their carrier-frequency offsets (CFO) relative to the AP 106 that transmitted the trigger frame and synchronize the start-time of their coordinated transmissions.

In one aspect, system 200 can be a system for coordinated partial-rank nulling in multi AP transmissions or a system for simultaneous multi-AP transmissions with coordinated partial-rank nulling. System 200 can include any number of APs 106 that can have overlapping BSSs 250 and overlapping ranges 255 for wireless communications. For example, a first AP 106 can have a first set of (e.g., one or more) STAs 102 within a first BSS 250 (e.g., WLAN) of the first AP 106 and a second AP 106 can have a second set of STAs 102 (e.g., one or more STAs) within a second BSS 250. Each one of the first AP 106 and the second AP 106 can include one or more STAs 102 of the other BSS 250 (e.g., neighboring AP 106) within its own range 255 for wireless communication.

A first AP 106 can be configured to transmit, to a second AP 106, a first message. The first message can be transmitted by the coordinator 205 as a part of the coordination phase in which APs 106 either jointly gather information from STAs 102 belonging to either of their BSS, or individually gather information from STAs 102 in their own BSS 250 and exchange gathered information between APs 106. The first message can identify a first station 102 of the first AP 106 for which interference from the second AP 106 is to be partially nulled. The first station 102 can be a STA that is a part of the first BSS 250 of the first AP 106 (e.g., configured for wireless communication with the first AP 106 via a WLAN of the first AP 106).

The message can include a first direction in which the interference from the second AP 106 is partially nulled at the first station 102. For instance, the first message can include a quantity of a first set of directions in which interference from second AP at first station is to be partially or fully nulled. For example, the first message can include a first set of directions in which interference is to be partially or fully nulled. For example, the first message can cause the second AP to identify a first set of directions in which interference to the first station is to be partially or fully nulled.

The first direction or set of directions can be a set of one or more linearly independent vectors or directions along which transmissions from the second AP 106 can be reduced below a predetermined threshold (e.g., a threshold corresponding to a power or gain level of the signal or defined in accordance with a noise signal level). The first message can include location information (e.g., location of the STA with respect to the AP 106, coordinates of the STA with respect to AP 106, information on the or any other information corresponding to spatial orientation of the STA).

First AP 106 can receive, from the second AP 106, a second message. The second message can be transmitted by the coordinator 205 during the coordination phase of the first and second APs 106. The second message can identify a second station of the second AP for which interference from the first AP is to be partially nulled or fully nulled. The second message can include or identify a second direction in which the interference from the first AP is partially nulled or fully nulled at the second station 102. The second direction or set of directions can be a linearly independent vector or direction along which transmissions from the first AP 106 can be reduced below a predetermined threshold (e.g., a threshold corresponding to a power or gain level of the signal or defined in accordance with a noise signal level). The second message can include location information (e.g., location of the STA with respect to the AP 106, coordinates of the STA with respect to AP 106, information on the or any other information corresponding to spatial orientation of the STA).

First AP 106 can establish, set up, modify or configure one or more settings of the first AP 106. The one or more settings can be settings to establish or coordinate with the second AP 106 a time and a frequency of a transmission to the first station 102. The transmission can be a message, a request, a response to a request or a network data packet, such as a packet of a spatial data stream 240. The time can be a time at which the first AP 106 is to transmit the transmission to the first station 102. The time can be synchronized to be the same time as a transmission from the second AP 106 to a second station 102. The time can be synchronized to be different than the time at which the second AP 106 transmits the second transmission to the second station 102. The one or more settings can be for the first AP 106 to send or transmit the transmission to the second station 102 according to the second direction to partially or fully null the interference at the second station 102.

The first message can identify at least a first station 102 of the first AP 106 for which interference from the second AP 106 is to be nulled. The first message can identify at least a quantity of directions in which the interference is to be partially nulled at the first station. The first message can identify the directions in which the interference is to be partially nulled at the first station 102. first AP to the second station). Also, the receipt of the first message can cause the second AP to identify a set of directions along which the interference to the first station is to be partially nulled.

For example, the direction for partially nulling interference at a particular station can depend on which other stations 102 are receiving the signal at the same time since the beamforming vectors can be computed for the totality of all receiving stations 102, and not just individual stations in isolation. In such examples, while a message may identify the station 102 at which interference is to be nulled, it may or may not identify a fixed constant direction for interference-nulling for that particular station 102. For example, in some implementations the direction for nulling may not be indicated or signaled by either AP, but instead each AP can independently determine or infer the directions for nulling for different stations 102 based upon exchanging other information, such as the set of stations 102 with which each AP 106 intends to communicate, the number of directions in which interference is to be nulled at each station, directions or locations of stations or APs and similar. Such information taken together with information gathered about channels between the APs 106 and STAs 102 that was acquired by a prior channel sounding process, can be used to determine directions for nulling for each station 102 independently.

First AP 106 can be configured to transmit to the first station 102 at the time and the frequency of the setting, a first spatial stream 240 of data comprising the transmission. The first spatial stream 240 can be oriented so as to partially null the interference from the first AP at the second station along the second set of directions. For example, first AP 106 can beamform the first spatial stream 240 (e.g., including the transmission) to be transmitted along the spatial vector or direction orthogonal to the first direction at the second station 102. The first stream of data can be coordinated with a second stream of data transmitted by the second AP 106 to the second client 102 at the time and frequency (e.g., the coordinated time and frequency) with the second stream oriented to partially or fully null the interference from the second AP at the first station 102 along the first set of directions. For instance, the first stream of data can be coordinated with a second stream of data transmitted by the second AP to the second station at the time and frequency, with the second stream of data oriented to partially null the interference from the second AP at the first station along the first direction.

The first station 102 can be configured to receive wireless transmissions from the first AP via the wireless local area network (WLAN) of the first AP. The second station 102 can be configured to receive wireless transmissions from the second AP via the WLAN of the second AP. The first station 102 and the second station 102 can each be located within a first range 255 of the wireless transmissions from the first AP 106 and a second range 255 of the wireless transmissions from the second AP 106.

First AP 106 can be configured to determine, based at least on the second set of one or more directions, a spatial orientation of one or more antennas 220 of the first AP 106. The spatial orientation of the one or more antennas 220 of the first AP 106 can be determined based at least on the locations (e.g., coordinates or GPS locations) of the first station, the second station and/or the first AP 106. First AP 106 can be configured to beamform the transmission with respect to the first station 102 based at least on the spatial orientation of the one or more antennas 220 of the first AP 106.

First AP 106 can be configured to exchange, with the second AP 106, the time and the frequency for coordinating transmissions of the first AP with transmissions of the second AP. For example, coordinators 205 can exchange channel or bands at which to transmit communications to their STAs 102 as well as the timing and frequency of the transmissions and/or the phase of the transmissions with respect to each other. First AP 106 can be configured to coordinate transmissions to the first station 102 by the first AP 106 with transmissions to the second station by the second AP using the time and the frequency.

First AP 106 can be configured to receive a packet comprising information on the first client. The packet can include a network packet, a message or a transmission that can include information on the characteristics of the channels of the first station and/or the second station. First AP 106 can be configured to identify, from the received packet, information indicative of a spatial orientation of the first client with respect to the second AP. For example, the first AP 106 can determine linearly independent vectors at the STA 102 at which interferences at the STA 102 are partially or fully nulled. First AP 106 can be configured to determine the first set of one or more directions of the first client using the spatial orientation.

First AP 106 can be configured to receive, from the second AP 106, a third message. The third message can identify a third station 102 of the second AP 106 (e.g., STA 102 within the BSS 250 of the second AP 106) for which interference from the first AP 106 is to be partially or fully nulled. The third message can include a fourth direction to partially null the interference at the first station and along the third direction. First AP 106 can configure the one or more settings of the first AP 106 to coordinate with the second AP 106 the time and the frequency of the transmission to the first station to be sent according to the third set of one or more directions to partially null the interference at the third station. First AP 106 can form a beam for the transmission to the first station according to the second set of one or more directions to partially null the interference at the second station and according to the third set of one or more directions to partially null the interference at the third station.

First AP 106 can be configured to transmit to the first station 102, a plurality of streams 240 comprising the transmission. The number of the streams 240 in the plurality of streams to be transmitted to the first station 102 may not exceed a number of antennas of the first station 102. The first AP can transmit, to a plurality of STAs comprising the first STA, a second plurality of streams comprising the plurality of streams. For example, a receiving STA 102 can have a number of receive antennas 220 that is not less than the number of spatial streams 240 directed to the receiving STA 102, while the receiving STA 102 can be exposed to a number of spatial streams 240 directed to all STAs within the range 255 of the AP 106 and therefore have interferences from more than the number of spatial streams 240 directed to the recipient STA 102.

### C. Multi-Access-Point Coordination for Nulling of Mutual Interferences

Coordinated beamforming (CBF) can include wireless communication techniques in which antennas of multiple devices coordinate and focus transmission of radio frequency signals toward specific directions or locations such as to form a beam from such coordination. The multiple devices may coordinate to adjust the strength and the signal clarity or integrity of transmitted radio signals to target or direct towards specific or identified receiving devices. CBF may implement signal nulling in which the transmitted signals from antennas are controlled to actively partially or fully suppress or diminish interference with respect to specific directions or locations that correspond to unintended recipients, while maintaining a desired signal strength at intended recipient devices. The CBF can involve two or more APs (e.g., three, four or more APs) simultaneously transmitting to their respective associated stations, with each AP beamforming its transmitted signal so as to minimize the interference caused to the stations of the other APs when those stations receive their respective intended signals.

In wireless communication systems, interference from neighboring devices and environmental factors can degrade the signal quality. Using beamforming to merely enhance the desired signal without considering interferences may be inadequate in dense urban environments or areas with high levels of wireless activity. This can result in decreased data rates, increased latency, and unreliable connectivity and pose challenges in achieving desired performance and reliability in wireless networks. While CBF with nulling can be used to minimize interferences caused by APs to unintended recipient STAs, it can be difficult to coordinate CBF between APs due to variability between different STAs across different BSSs.

The technical solutions overcome these challenges by providing systems and methods for efficient coordination of CBF between different APs. The technical solutions can include APs identifying other APs capable of participating in CBF, selecting candidate stations from the BSSs of participating APs and exchanging data on the station capabilities. A candidate station can include any station within a BSS 250 that can be selected as a candidate station for use in CBF. The APs can determine which stations will participate in CBF based on the station capabilities and coordinate with remaining APs the set of stations involved in CBF. The candidate station capabilities can be, or include, any technical features, abilities or configurations of a STA, such those corresponding to channel sounding, beamforming, or nulling, that can be used to determine the station's suitability for participation in CBF. The APs can implement CBF with nulling (e.g., full or partial) using parameters, such as a common BSS color and association identifiers corresponding to various stations across the BSSs of the participating APs.

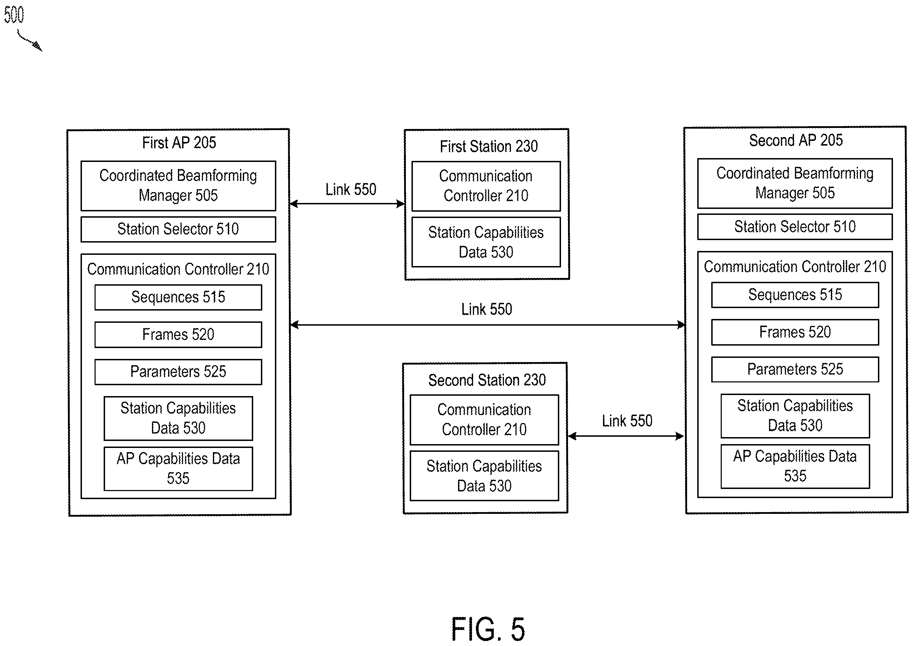

FIG. 5 illustrates an example of a system 500 for implementing a multi-access-point coordination for nulling mutual interference. Example system 500 can incorporate, utilize or include any features or functionalities of a system 200 or examples 300 and 400, and vice versa. System 500 can include one or more APs 205 in wireless communication via one or more wireless links 550 with one or more stations 230. For instance, a first AP 205 can be in a wireless communication 550 with a first station 230, which can be in first AP's BSS 250. Likewise, a second AP 205 can be in a wireless communication 550 with a second station 230, which can be in second AP's BSS 250. First AP 205 and second AP 205, as well as any additional APs 205, can be in wireless communication with each other via one or more links 550, to coordinate CBF between each other and with respect to any stations 230 with which they communicate, including the first and second stations 230, or any other stations 230 serviced by any of the APs 205.

Each AP 205, including the first AP 205 and the second AP 205, can include one or more coordinated beamforming managers 505 for establishing and managing CBF, one or more station selectors 510 for selection stations 230 for CBF operations and one or more communication controllers 210 for controlling communications with other APs 205 and stations 230. Each communication controller 210 can include, service, generate, receive, use, process or manage one or more sequences 515, frames 520, parameters 525 and station capabilities data 520, each of which can be used in the process of coordinating CBF operations between the APs 205.

For example, system 500 can utilize a first AP 205 to identify a second AP 205 as an AP that is capable or available to engage in coordinated beamforming (CBF). The first AP 205 can utilize a station selector 510 to choose one or more potential stations 230 within its own BSS 250 to participate in CBF using station capabilities data 530 of the stations 230 and its own AP capabilities data 535, such as channel and traffic characteristics to select STAs 230 to participate in the CBF operations. Station capabilities data 530 can include or indicate capabilities, settings or parameters of the individual stations 230 relevant to the ability and functionality of the stations 230 with respect to CBF. AP capabilities 535 can include features or attributes defining performance or functionality of APs 205 for implementing wireless communications. AP capabilities data 535 can include, for example, information on the amount of padding to include in the frames exchanged between the APs and STAs, or in the frames exchanged between the APs. The padding can provide receiving devices additional processing time before they respond. AP capabilities data 535 can include, for instance, signals or data indicative of the amount of padding a receiving device requests or a sending device provides. First AP 205 can utilize a communication controller 210 to exchange with the second AP 205, one or more station capabilities data 530 indicative of capabilities of the candidate stations 230. Second AP 205 can similarly gather and then share with the first AP 205 the AP capabilities data 535 of the second AP 205 and station capabilities data 530 of the stations 230 of the second BSS 250 of the second AP 205. Based on the gathered and exchanged capabilities of all the candidate stations 230, the first AP 205, the second AP 205 or the first and the second APs 205 together can determine which of the stations 230 are going to participate in the CBF process. The first AP 205 and the second AP 205 can implement a sequence (e.g., sequence 515) between each other to establish the set of stations 230 for CBF.

During the course of the sequence 515 (e.g., a handshake) for CBF establishment, the first AP 205 and the second AP 205 can exchange their AP capabilities data 535, such as their number of antennas or dimensions supported, sounding capabilities and nulling capabilities of the APs. The first and the second APs 205 can utilize parameters 525, such as a designated common basic service set (BSS) color or association identifiers (AID) indicative of participating stations 230. The AID can include a unique identifier used in wireless networks to identify and manage devices accessing the network within the same network infrastructure. The first AP 205 can conduct a handshake with the secondary AP to exchange candidate station capabilities data 530, such as antenna numbers, bandwidth, sounding and nulling capabilities, or AP capabilities data 535, such as maximum client limits. This first AP 205 can enter a phase of CBF coordination with the second AP 205, determining parameters 525 for CBF operation such as nulling direction, type, or duration, and utilizes information from the secondary AP's frame preamble to perform CBF based on common BSS color or AID.

Coordinated Beamforming Manager (CBM) 505 can include any combination of hardware and software for initiating, managing, and optimizing coordinated beamforming (CBF) between APs 205 within a wireless network. CBM 505 can include the functionality to manage or orchestrate the coordination of CBF activities between APs 205 and facilitate resource allocation and interference mitigation. For example, CBM 505 can include the functionality to manage or oversee the process of identifying candidate or participating stations 230, identifying and exchanging capabilities (e.g., station capabilities data 530 or AP capabilities data 535), and coordinating CBF sequences 515 between the APs 205 during a CBF setup.

Station selector 510 can include any combination of hardware and software for identifying and selecting suitable stations 230 within a range 255 of an AP 205. Station selector 510 can include the functionality to select stations 230 within one or more BSSs 250 to participate in CBF. Station selector 510 can utilize any combination of station capabilities data 530 or AP capabilities data 535 to select suitable candidate stations 230 based on various capabilities, such as the number of antennas, bandwidth support, and nulling capabilities of APs or candidate stations, which can be used to determine suitability of the stations 230 for participation in CBF. For instance, station selector 510 can identify STAs capable of supporting CBF based on their reported capabilities exchanged during the CBF setup process between the APs 205. For example, station selector 510 can utilize traffic characteristics, such as information on downlink data traffic at the APs 205 for each STA 230 within its BSS 250 or attributes of downlink data traffic available at the AP 205 for each STA 230. The attributes of downlink data traffic can include specific QoS requirements such as maximum allowed latency or minimum necessary data rate or zero packet loss, as well as data traffic that can be intermittent versus continuous. For example, station selector 510 can utilize channel characteristics, such as RSSIs observed at each STA 230 due to transmissions from each AP 205, proximity of a STA 230 to a certain AP 205 versus other APs 205, or downlink channel-state information (DL CSI) at each STA 230 with respect to each AP 205.

The communication controller 210 can include functionalities for managing and facilitating communication exchanges between APs and stations 230 for CBF establishment and operation. Communication controller 210 can include usage, communication or implementation of sequences 515 and exchanges of frames 520, parameters 525, AP capabilities data 535 and station capabilities data 530 between APs 205 to coordinate and establish CBF between APs 205. For example, the communication controller 210 facilitate and manage exchanges of frames 520 APs 205 and stations 230 as well as between different APs 205 during the CBF setup and data transmission phases.

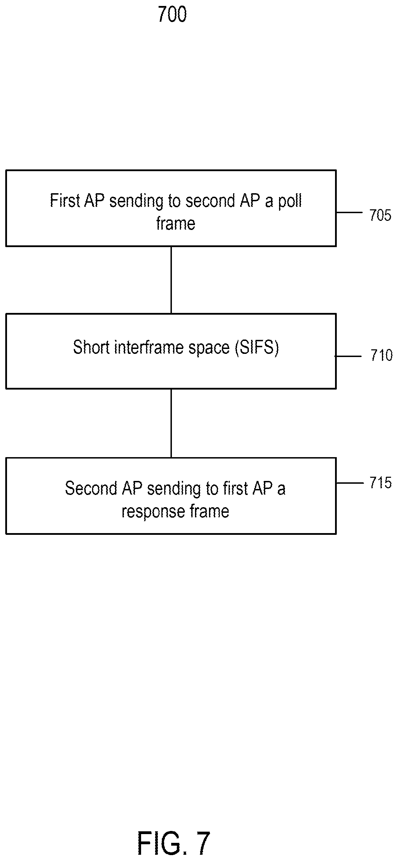

Sequences 515 can include any specific series of actions or messages exchanged between APs 205 during establishment, negotiation or setting up of CBF. A sequence 515 can include any exchange of information in which a first AP can send information on a set of stations to participate in CBF to a second AP and in which the second AP can respond with confirmation or additional station-specific information to finalize the CBF configuration or setup. Sequences 515 can include any arrangement or order of exchange of messages, frames, notifications or responses, such as for example, those discussed in connection with FIGs. 7-12. Sequence 515 can include a predetermined set of actions or steps within a wireless communication protocol, which can include coordinated beamforming operations between multiple access points and stations. Sequences 515 can include various communication sequences between APs 205 and between APs 205 and stations 230, including handshake operations, acknowledgement exchanges, and data transmission sequences used for establishing and maintaining CBF between APs 205 and their associated stations 230. For example, sequences 515 can include the exchange of multi-user requests to send (MU-RTS) frames, buffer-status report poll (BSRP) frames, coordinated beamforming physical-layer protocol data unit (CBF PPDU) transmissions and trigger-based block acknowledgements (Block-ACKs) control frames between APs 205 and between APs 205 and stations 230 during the course of CBF setup and data transmission phases. An RTS frame can include a message or a transmission signaling to other one or more devices on a WLAN network an intent to send data.

Frames 520 can include any messages, transmissions or data structures that include information for CBF. Frames 520 can include any transmissions or messages exchanged between APs 205 or APs 205 and STAs 230 during CBF setup coordination, operations or sequences 515. Frames 520 can include and carry data, such as station capabilities data 520 or parameters 525. Frames 520 can include data on station capabilities, synchronization information, and control signals used for effective coordination and operation of CBF between APs. For instance, frames 520 can include common initial control frames, such as MU-RTS/BSRP frames that can be addressed to stations 230 participating in CBF transmission opportunities (TXOP). A multi-user request to send (MU-RTS) can include a transmission to facilitate or trigger communications from multiple devices (e.g., multiple STAs) in accordance with reserved or coordinated time slots in a transmission period. A buffer status report poll (BSRP) can include a transmission to request a buffer status information on the amount of data of a station queued for transmission (e.g., a buffer size, queue status or priority information).

Frames 520 can include notification frames in which information or data of a set of candidate stations 230 for CBF can be transmitted at a start of a sequence 515. Frames 520 can include response frames that can be transmitted jointly by stations 230 of APs 205 addressed or triggered by, or responsive to, a common initial control frame. Frames 520 can include, for example, CBF PPDU frame, trigger-based block-ACK, null-data packet announcement (NDPA) frame, null-data packet (NDP) frame, beamforming report poll (BFRP) frame, beamforming report (BFR) frame or multi-user block acknowledgement request (MU-BAR) frame.

Parameters 525 can include any settings, characters, values or attributes used for establishing and performing CBF. Parameters 525 can include settings or attributes for quantifying various capabilities or parameters of stations 230 or APs 205 during establishment, negotiation or coordination of CBF. Parameters 525 can include or correspond to any station capabilities data 530 or AP capabilities data 535, and vice versa. Parameters 525 can include settings or attributes utilized during the CBF process to control various aspects of CBF operation. Parameters 525 can include nulling direction, nulling type, duration of transmission opportunities (TXOPs), and other parameters influencing CBF performance. Parameters 525 can include channel state information (CSI) or any data corresponding to CSI. Parameters 525 can include configuration of CBF between APs 205, facilitating nulling direction and synchronization for efficient data transmission. Parameters 525 can include any values, settings, attributes or parameters exchanged or included in any frames 520 or corresponding to any station capabilities data 530 or any AP capabilities data 535. For example, parameters 525 can include a common BSS color, a shared AID space, or a common MAC address for a group of devices (e.g., STAs 230). For example, a parameter 525 can include a distinct AID corresponding to the selected common BSS color. Parameters 525 can include information or data on a type of sounding process (joint vs sequential), and a type or mode of CBF nulling (full-rank, partial-rank, combinations of spatial-streams per client supported with CBF operation)

Station capabilities data 530 can include any data or information on capabilities, settings, and parameters of individual stations 230 within AP's relevant to the participation of stations 230 in CBF. Station capabilities data 530 can include parameters 525 corresponding to any information such as antenna numbers of stations 230, bandwidth support corresponding to a station or a channel, or sounding and nulling capabilities of a station 230 including data on whether a station supports particular sounding frames or has an ability to provide or determine channel state information. Station capabilities data 530 can include or utilize parameters 525 corresponding to maximum client limits of a station 230, antenna configurations, nulling capabilities, a type and volume of traffic handled by a station, path loss observations, a role in a network topology (e.g., whether a station is a relay or a primary endpoint), as well as any data on channel conditions, interference levels, data loss or network congestion. For instance, station capabilities data 530 can include the capabilities reported by stations 230 to APs 205 during the association of the STA 230 to a BSS 250 of an AP 205. Such data can be used for guiding the selection of suitable stations 230 for CBF participation and informing the configuration of CBF parameters. Station capabilities data 530 can include channel characteristics, such as channel state information obtained using channel sounding from one or more APs 205.

Access point (AP) capabilities 535 can include any features or attributes that define the performance or functionality of an AP 205. AP capabilities 535 can include features or attributes pertaining to wireless network communications. For instance, AP capabilities 535 can include number of antennas for transmission or receiving of wireless signals supported by an AP 205, bandwidth supported by an AP 205, sounding capabilities (e.g., joint sounding or separate sounding) supported by AP 205 or nulling capabilities (e.g., full-rank nulling, partial-rank nulling, maximum number of nulling dimensions) supported by AP 205. For example, AP capabilities 535 can include a maximum number of OBSS stations (e.g., stations that can be a part of a CBF operation) whose information can be stored (e.g., including channel sounding reports). AP capabilities 535 can include precoder type, such as minimum mean square error (MMSE) or zero forcing (ZF) techniques. For instance, with respect to AP capabilities 535 for nulling, with respect to full-rank nulling, a first AP can minimize the interference seen by a STA 230 of a second AP 205 along all orthogonal directions in which the STA 230 of the second AP 205 can receive transmission from the first AP (e.g., 2 such directions for 2x2 STA). For instance, with respect to a partial-rank nulling, an AP 205 can minimize the interference seen by a STA 230 of a second AP 205 along a subset of all orthogonal directions in which the STA of the second AP can receive a transmission from the first AP (for e.g., one such direction for a 2x2 STA).

AP capabilities 535 and station capabilities 530 can be indicated or expressed using any combination of parameters 525. Parameters 525 on AP 205 or STAs 230 can correspond to various traffic characteristics or channel characteristics. For instance, traffic characteristics can include data on network traffic, such as information on downlink data traffic at the APs 205 for each STA 230 within its BSS 250 or attributes of downlink data traffic available at the AP 205 for each STA 230. The attributes of downlink data traffic can include specific QoS requirements such as maximum allowed latency or minimum necessary data rate or zero packet loss, as well as data traffic that can be intermittent versus continuous. The channel characteristics can include data on communication channels, including RSSIs observed at each STA 230 due to transmissions from each AP 205, proximity of a STA 230 to a certain AP 205 versus other APs 205, or downlink channel-state information (DL CSI) at each STA 230 with respect to each AP 205. AP capabilities 535 or station capabilities data 530 can include channel characteristics, such as channel state information obtained using channel sounding from one or more APs 205.

At a high level, system 500 can be used to implement multiple stages of coordination for CBF between APs 205 and stations 230. These stages of coordination can include one or more of AP handshake stages, configuration of CBF operation stages, STA identification and information exchange stages, sounding stages, and per-transmission opportunity (TXOP) coordination stages. The AP handshake stage can occur during initial discovery, such as at the time of setting up a BSS 250 or during subsequent discovery when monitoring a channel and can be done during the eventual tear-down to CBF coordination. Configuration of CBF operation stage can include setting up the parameters (e.g., 525) and protocols necessary for coordinated beamforming (e.g., BSS color selection, association identifier (AID) assignment or AP identification). Station identification and information exchange stage can occur on a time scale of hundreds of milliseconds to about a few seconds and include APs identifying candidate stations 230 from among a potentially larger pool of associated stations and exchanging corresponding station capabilities and other relevant data for CBF.

Sounding stage (e.g., occurring on a time-scale of typically less than 100 milliseconds) can involve implementations of joint-sounding and sequential-sounding. A joint-sounding sequence can include any process or sequence of communications in which multiple stations or APs simultaneously transmit signals to measure and gather channel state information (CSI) across a network, such as in preparation for CBF. A sequential-sounding can include any process or sequence of communications in which stations or APs take turns to transmit signals in sequence, allowing each to gather CSI individually, such as one after the other. The CSI gathered via joint-sounding or sequential-sounding can be used to adjust, setup or optimize CBF to minimize interference or signal strength at particular STAs (e.g., STAs that are unintended recipients of transmissions that are intended for other STAs).

The per-TXOP coordination stage can include the CBF setup phase in which APs identify participating STAs to determine corresponding directions for nulling, the type of nulling (full-rank vs partial-rank), and exchange information needed for CBF-data transmission, such as TXOP duration. This stage can occur at a time scale of sounding or more frequently than the sounding. During the CBF-setup portion of the per-TXOP coordination stage, the APs can choose among different frame sequences to accomplish the setup. The CBF-data exchange phase can occur during SIFS after the CBF setup (e.g., within the same TXOP) if both APs identify at least one participating station each, and can include optional initial control frame exchange, such as MU-RTS/CTS or BSRP/BSR, to signal STAs of the upcoming CBF PPDU, followed by the CBF PPDU transmission and ACK reception.

At the AP handshake stage, an AP can recognize another AP on the same channel as capable of participating in CBF. This can occur by polling the other APs, or by detecting capabilities advertised by other AP (e.g., in beacon frames), or via centralized distribution of AP information to other APs. The APs can perform a handshake to exchange various capabilities, such as the number antennas or dimensions supported by each AP, sounding capabilities of each AP (e.g., joint-sounding or sequential-sounding) and nulling capabilities of each AP, e.g., full-rank nulling, partial-rank nulling, maximum number of nulling dimensions supported. For instance, with full-rank nulling, a first AP can minimize the interference seen by a second AP's stations along all orthogonal directions in which the second AP's stations can receive a transmission from the first AP (e.g., for two such directions for a station with two antennas). For instance, with partial-rank nulling, a first AP can minimize the interference seen by a second AP's STA along a subset of all orthogonal directions in which the second AP's stations can receive a transmission from the first AP (e.g., for one such direction for a station with two antennas). The APs can also exchange the maximum number of OBSS clients (e.g., clients that can be part of a CBF operation) whose information can be stored (e.g., including channel sounding reports) by the respective APs, and a precoder type (e.g., MMSE, ZF, any vendor-specific variants).

The configuration of CBF operation stage can include selection of BSS colors, assignment of AIDs and identification of APs. The APs can establish a common BSS color to be used for CBF PPDUs. The BSS color can be selected to be unique from either AP's BSS color. The candidate stations of the APs (e.g., stations that may participate in a CBF TXOPs) can be assigned a distinct AID (e.g., corresponding to the selected BSS color) and can process frames using such AID or color as part of a CBF-TXOP initiated by either of the participating APs. For instance, the APs can select a BSS color from one of the APs' BSS colors. The candidate STAs of the other AP (e.g., APs whose BSS color is not selected) can be assigned a distinct AID corresponding to the selected color and use it to process frames as a part of a CBF-TXOP initiated by either of the participating APs. For instance, the APs can select BSS color 0 for CBF PPDUs, which may not be interpreted as an OBSS PPDU by stations associated to either AP. The AID assignment can include the APs selecting a common AID space for assignment to the combined set of candidate stations of both APs and can correspond to the selected BSS color. For instance, no two candidate stations in this combined set can have the same AID from the common space. The AP identification can include communicating MAC addresses of both APs to the candidate stations of each AP, so that these stations can recognize transmissions by the other APs within the context of the CBF operation. For instance, the solutions can establish a single common MAC address to use for certain simultaneous transmissions (e.g., the control frames), such as TA of MU-RTSBSRP. This can be the MAC address of either AP, or a new MAC address assigned for CBF-related control frame transmissions from the APs. The frames can have MAC header/control/management frame protection schemes by using special security keys specific to such CBF transmissions. The BSS-color selection, AID assignments and AP identification can be distributed to all participating APs and candidate stations prior to CBF operation. The stations associated to either AP can be notified of the possibility of CBF operation via parameters. This can prevent station devices of either AP's BSS from interpreting frames exchanged during CBF operation as belonging to an OBSS (e.g., as inferred from BSS color or MAC address) and initiating a concurrent up-link transmission to their APs that might collide with such frames.

The station identification and information-exchange stage can include APs exchanging information about each other's candidate stations. For instance, APs can exchange relevant parameters or data about each other's candidate stations that can participate in an upcoming CBF transmission opportunities (CBF TXOPs). A CBF TXOP can be any predetermined or designated interval during which the APs and their associated STAs can communicate according to their established or coordinated beamforming. A CBF TXOP can include any combination of transmissions that can include CBF transmissions (e.g., transmissions that are partially or fully nulled with respect to one or more particular stations) or non-CBF transmissions (e.g., transmissions that are not nulled). During this interval, the APs and the STAs can adjust their transmission patterns to achieve partial or full nulling of interference at unintended receivers, allowing simultaneous transmissions to multiple intended receivers without disrupting each other's signals. For instance, a CBF TXOP can allow a first AP to communicate data to its first station within its own BSS while nulling the interference of that same communication at the second station (e.g., the unintended receiver) at the BSS of another (e.g., a second AP). This coordination can improve the spectrum efficiency of the APs and the stations, allowing for simultaneous communications between the first AP and its first STA and the second AP and its second STA, without interferences, thereby improving the overall network performance.

The information (e.g., the parameters exchanged between the APs about their respective stations) can include, for instance, AIDs of each candidate STA, physical capabilities of the candidate stations (e.g., operating bandwidth, max Rx Nss, sounding-feedback capability, etc.), MAC capabilities of each candidate STA (e.g., padding requirements, etc.), or sets of station-groups identified by group-indices. A group-index can indicate one or more of the following information: a list of stations of a particular AP, per-STA Nss for the group, RU allocation for the group. This information can serve as shorthand for future messages exchanged between the APs, for e.g., on a per-TXOP basis. Station-groups can include only stations of a first AP or only stations of a second AP, or a mixture of both. The choice of candidate CBF stations can depend on various factors such as whether a station associated with an AP currently has traffic (such as downlink traffic intended for that station at its associated or serving AP), a type of traffic for that station or difference in path-loss observed at that station from serving AP vs interfering AP. For instance, if the path-loss difference (e.g., from the serving AP vs the interfering AP) as observed at certain stations is large enough, then the two APs can engage in concurrent transmissions to such STAs without nulling (e.g., via coordinated spatial reuse). Such stations may not be candidates for CBF. Conversely, an AP may also signal the absence of any candidate CBF STAs. The benefit of such an approach is to avoid exchanging "quasi-static" information per TXOP (such as information that is not expected to change across two or more successive CBF TXOPs). Since CBF can provide maximum gains when each AP has DL traffic to few stations, the information exchange can be relatively light (e.g., up to 4 stations across 2 APs). If any AP has downlink (DL) traffic to 4 or more stations within its BSS, "in-BSS" DL-MUMIMO can offset some of the gains of CBF. If path-loss conditions permit, some stations associated with either AP can be candidates for coordinated spatial-reuse, and the rest (e.g., fewer than or equal to 4) may be candidates for CBF.

For instance, aspects of the station identification and information exchange can include poll-based sequences in which one AP transmits to the second AP poll frames (e.g., to query the receiving AP for stations with traffic) using non-HT PPDUs that may have padding. The poll frame can be a trigger frame specifying transmission parameters to be used by the receiving AP for transmitting the response frame. The receiving AP can respond to the poll frame with a response frame which can include information for stations of the receiving APs, which can be done using non-HT PPDU. Each AP can send an unsolicited notification to the other AP with the station information (e.g., parameters) in advance, with the other AP transmitting an acknowledgment (ACK) of the received notification. Following successful exchange of STA information, a number of subsequent TXOPs may utilize this information for CBF operation and either AP can initiate a subsequent CBF-TXOP. In an example, system 500 can include two or more APs 205, each one with one or more stations 230 within its own BSS 250 and having a range 255 that includes at least one station 230 of the BSS 250 of another AP 205 of the two or more APs 205. As a result of the stations 230 of the adjacent APs 205 with overlapping ranges 255, APs 205 or stations 230 can experience interferences during wireless communication exchanges. To reduce these interferences, the system 500 can provide a multi-AP CBF coordination functionality to facilitate establishment and coordination of CBF between the APs 205 and stations 230.

System 500 can include a first AP 205 configured to identify a second AP 205 capable of participating in coordinated beamforming (CBF). The first AP 205 can be configured to select one or more candidate stations of the first AP to use for CBF. The first AP 205 can be configured to exchange, with the second AP 205, capabilities (e.g., station data capabilities 530) of the one or more candidate stations 230 to participate in CBF. The first AP 205 can be configured to determine one or more stations 230 of the one or more candidate stations 230 to be included in CBF based at least on the capabilities (e.g., station capabilities data 530) of the one or more candidate stations 230. The first AP 205 can be configured to perform a sequence 515 with the second AP 205 to exchange, between the first AP 205 and the second AP 205, a set of stations 230 of the first AP 205 and the second AP 205 (e.g., stations 230 from the BSSs 250 of the first and second APs 205) to use for CBF. The first AP 205 can identify to the second AP 205 the determined one or more stations 230 as participating in CBF.

The first AP 205 can be configured to identify parameters 525. The first AP 205 can identify a common basic service set (BSS) color and a common association identifier (AID) space for the set of stations 230 to participate in CBF. The first AP 205 can be configured to implement partial nulling with respect to a first station 230 of the set of stations 230 responsive to the BSS color and a value (e.g., parameter 525) in the common AID space corresponding to the station 230. For instance, partial-rank or full-rank nulling operations can be implemented using CBF coordination implemented by utilization or exchange of parameters 525, such as common BSS color and AID. For example, parameters 525 such as bandwidth and sounding capabilities can be identified and utilized for nulling configuration or setup.

The first AP 205 can be configured to perform a handshake (e.g., sequence 515) with the second AP 205 to exchange the capabilities (e.g., station data capabilities 530) of the one or more candidate stations 230. The capabilities (e.g., station data capabilities 530) can include one or more of: a number of antennas, an amount of bandwidth, one or more sounding capabilities, one or more nulling capabilities (e.g., station data capabilities 530) or a maximum number of clients that can be part of CBF. For instance, handshake sequence 515 can include APs 205 exchanging information about candidate stations 230 for CBF. The capabilities (e.g., station data capabilities 530) can include number of antennas, bandwidth and sounding capabilities. The capabilities can include nulling capabilities or maximum client limits of AP capabilities data 535. The handshake might include information about modulation and coding scheme (MCS) and its related error vector magnitude (EVM).

The MCS can include or identify one or more parameters indicative of a data rate or error correction level in a wireless communication, which can be used, for example, to balance the speed of communications with reliability of the transmissions. The MCS can define or set the combination of modulation type and error-correction coding rate. For instance, a value parameter that is above a threshold for MCS can use a 64 Quadrature Amplitude Modulation (64-QAM) with a lower coding rate for faster data transmissions (e.g., transmissions greater than a transmission rate threshold), while a value parameter for MCS below the threshold can use BPSK with a higher coding rate for more reliable communications in poor signal conditions, but at lower transmission rate (e.g., transmissions lower than the transmission rate threshold).

The first AP 205 can be configured to perform coordination to enter a CBF enabled phase with the second AP 205. The coordination can include a determination of at least one of a direction for nulling, a type of nulling or a duration of a transmission opportunity (TXOP) for the one or more candidate stations. For example, the first AP 205 can be configured to identify, from a preamble of a frame 520 from the second AP 205, at least one of a common basic service set (BSS) color or an association identifier (AID) corresponding to a station of the set of stations 230. The first AP 205 can be configured to perform CBF with respect to the station 230, based on the at least one of the common BSS color or the AID. For instance, a determination of the parameters 525 can include the first AP 205 predicting and preparing for CBF transmissions based on traffic profiles and other factors. For instance, the common BSS color or AID can be for CBF coordination. Parameters 525, such as a size of a cyclic prefix long training field (CP-LTF) and a packet-extension (T_PE), which can be utilized for CBF coordination.

The first AP 205 can be configured to identify a common medium access control (MAC) address for simultaneous transmission from both the first AP 205 and the second AP 205. The first AP 205 can be configured to perform CBF, based at least on the common MAC address. The first AP 205 can be configured to communicate, to the set of stations 230, a medium access control (MAC) address of at least one of the first AP 205 or the second AP 205 to the set of stations 230. The common MAC address can be used by the first AP or the second AP to address stations 230 participating in CBF. The STAs 230 participating in CBF can recognize the common MAC address. The stations 230 can receive MAC addresses of participating APs 205 for CBF. APs 205 can communicate transmission opportunity duration and bandwidth information between each other and to the stations 230 in order to facilitate CBF.

The first AP 205 can be configured to transmit a beamforming report poll (BFRP) frame 520 to a first station 230 of the set of stations 230 configured for wireless communication with the first AP 205. For instance, the transmission of BFRP frames 520 can facilitate stations 230 to report channel characteristics to APs 205 for adaptive CBF adjustments. The first AP 205 can be configured to receive, from the first station responsive to the BFRP frame 502, a beamforming report (BFR) (e.g., frame 520) identifying one or more characteristics of one or more signals received by the first station 230. This can allow APs 205 to adjust CBF based on real-time channel conditions. The first AP 205 can be configured to adjust CBF responsive to the one or more characteristics.

The first AP 205 can be configured to select one or more candidate stations 230 based on at least one of: data traffic intended for a station of the one or more candidate stations, a type of data traffic intended for the station, or a received-signal-strength-indication (RSSI) or a path-loss observed at the station from the first AP 205 or the second AP 205. For instance, APs 205 can select candidate stations based on traffic profiles and path loss observations. The second AP 205 can be configured to select one or more stations 230 of the second AP 205 to participate in CBF.

In some aspects, standards for WLAN communications can include settings for CBF for two or more APs 205 to simultaneously transmit to their respective associated STAs 230. Each AP 205 can beamform its signal to minimize interference to other STAs 230 of other APs 205. The described technical solutions can include systems and methods for multi-AP coordination to configure CBF in the context of two APs 205 or any other number of APs 205, including three, four or more APs 205.

There can be several stages of coordinating CBF with nulling. These can include an AP 205 handshake, which can occur at initial discovery, such as time of setting up a BSS or during subsequent discovery when monitoring a channel, or during an eventual tear down of CBF coordination. Stages can include configuration of CBF operation. Stages can include identification and information exchange of stations 230, such as those that can take place over a timescale of 100s of milliseconds to a few seconds, where APs 205 can identify candidate STAs 230 and exchange relevant information for CBF. Stages can include sounding, conducted at a medium timescale of up to 100ms, which can include, for example, joint and sequential sounding. Stages can include per transmission opportunity (TXOP) coordination, which can include CBF-setup where APs identify or determine participating STAs 230 to determine corresponding directions for nulling, or type of nulling (e.g., full-rank vs. partial rank nulling). CBF setup can include APs 205 exchanging information for CBF-data transmission (e.g., TXOP duration). CBF setup can include APs 205 choosing among different frame sequences to accomplish these tasks. CBF setup can include identification of participating STAs 230.

CBF data exchange can occur following the CBF setup, when at least two APs 205 have identified at least one participating STA 230 each as a part of the CBF setup. CBF data can include both APs 205 transmitting CBF PPDU, where each AP addresses its transmission to the participating STAs within its BSS while nulling interference partially or fully towards participating STAs in the other AP's BSS. CBF data coordination can include in short interframe space (SIFS) after CBF setup (e.g., within the same TXOP), when both APs 205 identify at least one participating STA 230 each. Optional initial control frame exchange (e.g., MU-RTS/CTS, BSRP/BSR or others) can be used to signal STAs 230 of upcoming CBF PPDU. CBF data can include CBF-PPDU transmission and ACK reception.

AP 205 can recognize another AP 205 on the same channel as capable of participating in CBF, which can happen by polling the other APs 205, or implicitly by detecting capabilities advertised by other AP 205, using for example, beacon frames 520, or through centralized distribution of AP 205 information to other APs 205.

APs 205 can perform a handshake to exchange various capabilities (e.g., station capabilities data 530 or AP capabilities data 535), such as the number of Tx antennas/dimensions supported by each AP 205, bandwidth supported by each AP 205, sounding capabilities of each AP 205 (e.g., joint-sounding vs separate-sounding), nulling capabilities of each AP 205 (e.g., full-rank nulling, partial-rank nulling, maximum number of nulling dimensions supported). With full-rank nulling, a first AP 205 can minimize the interference seen by a second AP's STA 230 along all orthogonal directions in which the second AP's STA 230 can receive a transmission from the first AP 205 (for example, two such directions for a 2x2 STA 230).With partial-rank nulling, a first AP 205 can minimize the interference seen by a second AP's STA 230 along a subset of all orthogonal directions in which the second AP's STA 230 can receive a transmission from the first AP 205 (for example, one such direction for a 2x2 STA). APs 205 can exchange their respective capabilities (e.g., AP capabilities data 535), such as maximum number of overlapping BSS (OBSS) stations 230 whose information can be stored (e.g., including channel sounding reports) by the APs 205, and precoder type (e.g., MMSE, ZF, any vendor-specific variants). AP-to-AP security keys can be negotiated between the APs 205. Subsequent to an initial handshake, the APs 205 may enter a CBF-enabled phase which permits further stages of coordination to occur. APs 205 may also signal termination of CBF-enabled phase and disengage from further coordination.

In one aspect, the system 500 can include a second AP 205 having the configuration or capability to receive a request from a first AP 205 that can initiate a data exchange involving one or more stations from both APs. For example, in a scenario where the first AP 205 intends to establish a coordinated beamforming (CBF) session with second AP 205, the first AP 205 can send a request (e.g., frame 520) to the second AP 205 to commence the exchange. Upon receipt of the exchange request, the second AP 205 can acquire the first data from the first AP 205 and can represent the capabilities of the stations 230 of the first AP to engage in coordinated beamforming (CBF). For instance, if the stations of the first AP 205 include MU-MIMO capabilities and support beamforming, the first data transmitted by the first AP 205 can include information on these capabilities. Subsequently, based on the identified capabilities of the stations 230 of the first AP 205, the second AP 205 can generate second data detailing the capabilities of its own stations 230 for CBF participation. If stations 230 of the second AP 205 are equipped with advanced beamforming capabilities and support receiving multi-user transmissions, the second data generated by the second AP can include these parameters 525. The system 500 can then execute a sequence to exchange a portion of the second data with the first AP 205, focusing on a selected set of stations 230 from both APs 205 eligible for CBF utilization. This exchange can include negotiating with the first AP 205 to determine which stations from the first AP 205 and the second AP 205 include the requisite capabilities and are suitable for participation in the CBF session. The selection of these stations 230 can be determined by considering the capabilities of both sets of stations 230, facilitating an optimized CBF operation.

There can be several steps involved in configuring CBF operation between APs 205. The APs 205 can establish a common BSS color to be used for CBF PPDUs, which can either be different from either AP's BSS color or selected from one of the APs' BSS colors. The candidate STAs of both APs 205 (e.g., those STAs that can participate in a CBF TXOP) can each be assigned a distinct AID. The distinct AID assigned to a candidate STA can correspond to a selected common BSS color such that the candidate STA can process frames with this color as part of a CBF-TXOP initiated by either of the participating APs.

The APs may select a common BSS color from one of the APs' BSS colors: The candidate STAs 230 of the other AP (i.e., whose BSS color is not selected) are assigned a distinct AID corresponding to the above selected color and can be configured to process frames with this color as part of a CBF-TXOP initiated by either of the participating APs. The APs 205 can select a common BSS color of 0 for CBF PPDUs, which may not be interpreted as an overlapping BSS PPDU by STAs 230 associated to either AP 205.

With respect to AID assignment, the APs 205 can select a common AID space for assignment to the combined set of candidate STAs 230 of both APs 205. For instance, no two candidate STAs 230 in this combined set can have the same AID from the common space. For instance, the AID assigned to a STA 230 from the common AID space can correspond to a common BSS color.

AP-identification can include communicating MAC address of both APs 205 to the candidate STAs 230 of each AP 205, so that each AP's STAs 230 can recognize transmissions by the other AP 205 within the context of CBF operation. AP identification can include establishing parameters 525, such as a single common MAC address. For example, the single common MAC address could be used in frames that are simultaneously transmitted by both APs to STAs 230 associated with either AP. For example, the single common MAC address could be used in transmissions from a first AP 205 to STAs 230 associated with a second AP 205. For example, the single common MAC address could be used in frames 520 that are common initial-control frames addressed to STAs 230 of either AP or both APs, e.g., TA of MU-RTS or BSRP. For example, the single common MAC address could be a MAC address of either AP 205, or a designated new MAC address meant for CBF-related control frame transmissions from the APs 205.

Frames 520 utilizing the single common MAC address can have MAC header/control/management frame protection schemes, by using security keys specific to such CBF transmissions. BSS-color selection, AID assignments and AP identification can be distributed to all participating APs 205 and candidate STAs 230 prior to CBF operation. STAs 230 associated to either AP 205 can be notified of the possibility of CBF operation with parameters 525. This can be done to prevent STA 230 devices of either AP's 205 BSS from interpreting frames exchanged during CBF operation as belonging to an overlapping BSS (for e.g., as inferred from BSS color or MAC address) and initiating a concurrent up-link transmission to their respective APs 205 that might collide with such frames 520.

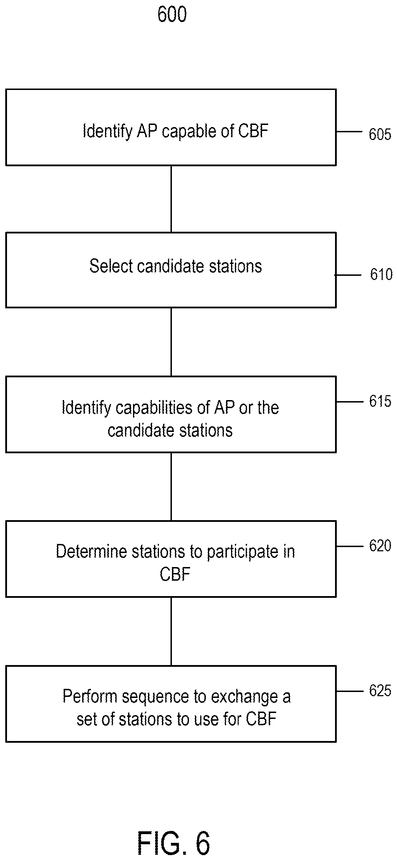

Referring now to FIG. 6 an example method 600 of providing a multi-AP coordination of CBF is illustrated. Method 600 can be implemented, for example, to implement a configuration of CBF operation or a CBF setup. Method 600 can be implemented, using for example, system 200, system 500, or any of the features discussed in connection with FIGS. 1A-5. Method 600 can include acts 605-625. At 605, the method can include identifying APs capable of CBF. At 610, the method can include selecting candidate stations. At 615, the method can include performing channel sounding and obtaining channel state information. At 620, the method can exchange the station capabilities between APs. At 625, the method can perform a sequence to exchange a set of stations to use for CBF.

At 605, the method can include identifying APs capable of CBF. The method can include identifying, by a first access point (AP), a second AP that is capable of participating in coordinated beamforming (CBF). For instance, the first AP can be configured to implement a handshake sequence with one or more other APs within a wireless communication range of the first AP. The handshake sequence can include exchange of one or more frames. The handshake can identify one or more of the capabilities of the at least one of the first AP or the one or more candidate stations. For instance, the handshake can be used to identify, exchange or communicate one or more AP capabilities data of the APs involved (e.g., first or second APs) or one or more station capabilities data of the STAs of the first AP or STAs of the second AP. For instance, the identification of APs capable of CBF can be facilitated by a network controller or management entity, such as a coordinated beamforming manager, that can provide or disseminate information to each individual APs on the candidate CBF APs in its range or neighborhood.

The first AP can identify one or more parameters, such as parameters corresponding to other APs within the communication range of the first AP. For instance, the first AP can identify MAC addresses of the adjacent or nearby APs. The first AP can identify a common medium access control (MAC) address for transmissions from either or both of the first AP and the second AP. For example, the first AP can identify CBF capabilities of APs within the communication range. For instance, the first AP can send a message that can trigger a receiving AP to provide a response indicative of whether or not the second AP is capable or configured of CBF operation.

The method can include exchanging of one or more AP capabilities. For instance, the first and the second APs can exchange the maximum number of clients that each AP can support as a part of CBF operation. AP capabilities exchanged can include, for example, a number of antennas, an amount of bandwidth, one or more sounding capabilities, one or more nulling capabilities, precoder type, a maximum number of stations that can be part of CBF or, a maximum number of candidate stations, traffic characteristics, channel characteristics, such as channel state information (CSI) that can be obtained from one or more stations using channel sounding initiated by one or more APs 205. AP capabilities exchanged can include any AP capabilities 535 discussed herein.

For example, the method can include identifying common BSS color or AID or AID space for the set of stations to participate in CBF. For example the BSS color or the AID or AID space can be identified before candidate STAs are identified. The method can identify a common BSS color or an AID space via network configuration of the APs or by over-the-air handshake across the APs (e.g., when the APs discover each other and exchange communications). The actual AID assignment (from the common AID space) to a STA could happen when it first associates to the AP (as it is done in 802.11 currently) or could happen subsequently after a STA has been identified as a candidate STA for CBF operation in step 610.

At 610, the method can include selecting candidate stations. The method can include the first AP selecting one or more candidate stations of the first AP, such as candidate stations of the first AP to include or to use for CBF. The first AP can select one or more candidate stations based on at least one of one or more parameters that can be exchanged using any one or more messages that can include any type or form of frames, such as beacon frames, MU-RTS frames, CTS frames, BSRP frames, BSR frames, NDP frames or NDPA frames. These frames can include or indicate any parameters or information about stations in the overlapping BSS of the two or more stations, including any information on data traffic intended for a station of the one or more candidate stations, a type of data traffic intended for the station, or a received-signal-strength-indication (RSSI) or a path-loss observed at the station from the first AP or the second AP.

The first AP can be configured to select one or more candidate stations of the first AP to participate in CBF operation based on any information about CBF capabilities of the second AP or capabilities of any of the candidate or participating stations of the second AP. For instance, the first AP can be configured to select one or more candidate stations (e.g., of the first AP) based on at least one of: data traffic intended for a station of the one or more candidate stations, a type of data traffic intended for the station, or a received-signal-strength-indication (RSSI) or a path-loss observed at the station from the first AP or the second AP. Similarly, the second AP can be configured to select one or more stations of the second AP to participate in CBF operation based on any information about CBF capabilities of the first AP or capabilities of any of the candidate or participating stations of the first AP. Likewise, the first AP can be configured to de-select or remove one or more previously selected candidate stations of the first AP from participating in future CBF operation, based on one or more parameters. Similarly, the second AP can be configured to de-select or remove one or more previously selected candidate stations of the second AP from participating in future CBF operation, based on one or more parameters.

Parameters can be utilized for selection of candidate STAs. For instance, parameters can include traffic characteristics, such as information on data traffic intended for a station, a type of data traffic intended for a station, can be utilized. For instance, parameters can include channel characteristics, such as a received-signal-strength-indication (RSSI) or a path-loss observed at a station from the first AP or the second AP, downlink (DL) CSI as measured at a station from the first AP or the second AP. For instance, parameters can include Key Performance Indicators (KPIs) of a station from prior CBF operation, such as achieved throughput, SNR, or latency.

Parameters for selection or deselection of candidate stations for CBF can include various criteria. For instance, a station can be selected as a candidate station for CBF if the amount of data traffic available for the station over a pre-determined period of time at its associated AP is larger than a pre-determined threshold. For instance, a station can be selected as a candidate station for CBF if the path-loss difference (i.e., the path-loss from the interfering AP minus the path loss from its associated AP) lies within a pre-determined range. For instance, a previously selected candidate station can be de-selected or removed as a candidate station for CBF if the amount of data traffic available for the station over a certain period of time at its associated AP is below a second pre-determined threshold. For instance, a previously selected candidate station can be de-selected or removed as a candidate station for CBF if the path-loss difference (i.e., the path-loss from the interfering AP minus the path loss from its associated AP) falls outside a second pre-determined range. For instance, a previously selected candidate station can be de-selected or removed as a candidate station for CBF if one or more key performance indicators (KPIs) of the station under previous CBF operation fail to attain pre-determined criteria, such as for example the throughput fails to exceed a minimum limit, SNR fails to exceed a minimum limit, or latency fails to be below a maximum limit. For instance, a previously selected candidate station can be de-selected or removed as a candidate station for CBF if the CSI obtained from operation 615 indicates that the station is unsuitable for CBF operation.

The method can include the first AP performing, via a CBF enabled phase, a coordination with the second AP. The coordination can include determining (e.g., measuring, detecting, or receiving) one or more parameters of the stations of first AP or the stations of the second AP. The parameters can include any one or more of a direction for nulling, a type of nulling or a duration of a transmission opportunity (TXOP) for the one or more candidate stations. Parameters can be utilized for selection of candidate STAs. For instance, traffic characteristics, such as information on data traffic intended for a station, a type of data traffic intended for a station, can be utilized. For instance, channel characteristics, such as a received-signal-strength-indication (RSSI) or a path-loss observed at a station from the first AP or the second AP, downlink (DL) CSI as measured at a station from the first AP or the second AP. Key Performance Indicators (KPIs) of a station from prior CBF operation, such as achieved throughput, SNR, or latency.

The first AP can identify a common basic service set (BSS) color and a common association identifier (AID) space for the set of stations to participate in CBF. The first AP can receive from the second AP or identify via one or more frames and communications with the second AP or stations of the second AP, the common BSS color and one or more values for the AID for one or more stations of the second AP, and vice versa. The first AP can identify, from a preamble of a frame from the second AP, at least one of a common basic service set (BSS) color or an association identifier (AID) corresponding to a station of the set of stations. For instance, when each AP communicates its list of candidate STAs with the other AP, the communicating AP can identify the candidate STAs by means of their AIDs. For instance, the AP may provide the other AP with a list of AIDs of its candidate STAs. The method can implement one or more operations 610 following operation 605. The method can implement operation 610 in response to an outcome of or an information obtained from one or more previously implemented operations 615 or 625.

At 615, the method can identify capabilities of at least one of the first AP or the one or more candidate stations of the first AP. For instance, the method can perform channel sounding and obtain channel state information (CSI). The method can include exchanging between APs and between APs and STAs any information relevant to performing CBF operations with the selected candidate stations. For instance, the APs can exchange with their associated STAs any data or parameters (e.g., AP capabilities data or station capabilities data) for establishing or performing CBF operations. For example, the APs or APs and STAs can exchange data or parameters corresponding to the maximum number of clients that can be part of CBF for one or more of the stations. The STAs or the APs can perform or facilitate channel sounding. For example, the APs and STAs can determine or estimate the characteristics and parameters of one or more wireless communication channels by transmitting known signals and analyzing the received signal quality and characteristics. For example, either the first AP or the second AP can initiate a channel sounding sequence, such as a joint-sounding sequence or a sequential-sounding sequence. For example, the channel sounding sequence can facilitate the measurement of downlink (DL) CSI at a station. For example, a station associated to the first AP or to the second AP can feedback or report the downlink (DL) CSI as measured from its associated AP. For example, a station associated to the first AP can feedback or report the downlink (DL) CSI as measured from the second AP. For example, a station associated to the second AP can feedback or report the downlink (DL) CSI as measured from the first AP. For example, an AP can receive a CSI feedback or report from a station associated with the other AP, either directly from the station, or from the other AP, or from a network controller or management entity. The method can implement one or more operations 615 following operation 610.

For example, the first AP can be configured to transmit a beamforming report poll (BFRP) frame to a first station of the set of stations of the first AP. The first station can be a station (e.g., a client or a STA) configured for wireless communication with the first AP, such as a part of a BSS of the first AP. The first AP can be configured to receive, from the first station responsive to the BFRP frame, a beamforming report (BFR) that can identify one or more characteristics of one or more signals received by the first station. The one or more characteristics can include, for example, any one or more of features corresponding to strength of the signal, such as the power or amplitude of the signal, a phase or a phase shift of the signal, a signal to noise ratio (SNR) of the signal, a channel impulse response, a channel state information (e.g., information about channel's condition, such as path loss, fading or spatial correlation information), angle of arrival of signal, or any other information that can be used for adjustment of beamforming..

At 620, the method can include the first AP determining one or more stations of the one or more candidate stations to participate in CBF based at least on the capabilities. For instance, the first AP can select the one or more stations to participate in CBF based at least on the capabilities of the stations, such as particular station capabilities data that match, coincide with or otherwise correspond to AP capabilities data of the first or the second AP. For instance, the first AP can select the one or more stations based on matching capabilities of the one or more stations and the capabilities of the first AP or the second AP, such as a corresponding, matching or otherwise acceptable data on the number of antennas, an amount of bandwidth, one or more sounding capabilities, one or more nulling capabilities, precoder type, a maximum number of stations that can be a part of CBF, a maximum number of candidate stations that can be supported in CBF, any network traffic characteristics, any channel characteristics or any CSI data. The first AP can be configured to communicate, to the set of stations, at least one of a common medium access control (MAC) address or the MAC address of the first AP or the MAC address of the second AP.

The method can include exchanging, between the APs, and between the APs and their respective associated STAs, any information relevant to performing CBF operations with the selected candidate stations. The method can include the one or the first AP exchanging with the second AP, capabilities of the one or more candidate stations to participate for CBF. The capabilities can include station capabilities data and parameters of the stations indicative of available settings, configurations or capabilities of each of the candidate stations. For example, the first AP can perform a handshake with the second AP to exchange capabilities of the one or more candidate stations or the one or more APs. The one or more capabilities can include any one or more of: a number of antennas of one or more of the stations, an amount of bandwidth of one or more of the stations, channels or bands used by one or more of the stations, one or more sounding capabilities or configurations of one or more of the stations, one or more nulling capabilities or partial nulling capabilities of one or more of the stations, or a maximum number of clients that can be part of CBF for one or more of the stations, or a maximum total number of spatial streams transmitted during CBF operation (e.g., by both APs) that one or more stations can support.

For instance, the first and second APs can exchange information on stations expected to participate in one or more subsequent CBF transmission opportunities (TXOPs). The first AP can send to the second AP, information such as AID of each candidate STA, the physical-layer capabilities (e.g., station capability data) of each candidate station, such as operating bandwidth, maximum number of receive spatial streams (e.g., Receive Nss), sounding-feedback capability, as well as the MAC capabilities and any padding preferences. A set of station-groups can be identified using group-indices, wherein each station-group may include a list of stations of the first AP in that group, a list of stations of the second AP in that group, per-STA Nss for the group, and RU allocation for the group. These group-indices may serve as shorthand for future messages exchanged between the APs on a per-TXOP basis to identify individual groups of STAs. A station-group may include only STAs of the first AP, only STAs of the second AP, or a mixture of both.

For instance, the information exchange can include four stations across two APs, which can aim to maximize the CBF impact or performance. For instance, the information exchange can seek to avoid exchanging quasi-static information per TXOP, i.e., the information that is common or unchanging across TXOPs may not be repeated per-TXOP, but rather can be shared beforehand. Such information can include parameters related to the CBF PPDU (e.g., one or more of MCS of SIG field, CP-LTF size, LDPC-extra-symbol, pre-FEC padding factor, presence of extra LTFs, number of LTFs, etc.) For example, following the successful exchange of STA information, subsequent TXOPs may utilize this information for CBF operation, with either AP capable of initiating a subsequent CBF-TXOP based on the exchanged information. The first AP can include communicating a medium access control (MAC) address to one or more stations associated with the first AP's BSS, for example, including the candidate stations for CBF identified by the first AP. Likewise, the second AP can include communicating a medium access control (MAC) address to one or more stations associated with the second AP's BSS, for example, including the candidate stations for CBF identified by the second AP. The MAC address communicated by either AP can be a MAC address of the first AP, the MAC address of the second AP or a common MAC address for both the first AP and the second AP (and any other APs included in CBF). The first AP can include transmitting a beamforming report poll (BFRP) frame to a first station of the set of stations configured for wireless communication with the first AP. The first AP can transmit a BFRP frame to all the stations identified for CBF. The first AP can receive from the first station of the set of stations (or any other stations who received BFRP frame), in response to the BFRP frame, a beamforming report (BFR) frame. The BFR frame can indicate or identify one or more characteristics of one or more signals received by the first station, or one or more parameters of the first station, such as the information indicative of signal strength, signal quality, signal direction or channel conditions or performance. The method can implement one or more operations 620 following operation 610.

The method can include the first AP identifying, from a preamble of a frame from the second AP, at least one of a common basic service set (BSS) color or an association identifier (AID) corresponding to a station of the set of stations and performing CBF with respect to the station, based on the at least one of the common BSS color or the AID. The method can include the first AP identifying a common medium access control (MAC) address for simultaneous transmission from both the first AP and the second AP and perform CBF, based at least on the common MAC address.

At 625, the method can include the first AP performing, with the second AP, a sequence to exchange (e.g., between the first AP and the second AP) a set of stations of the first AP and the second AP to participate in CBF. The first AP can identify to the second AP the determined one or more stations as participating in CBF, such as the one or more stations selected or identified by the first AP to participate in CBF, based on matching, corresponding or acceptable station capabilities data.

The first AP can be configured to enter a CBF enabled phase to perform coordination with the second AP. The coordination or the coordination phase can include a determination of at least one of a number of spatial streams, a direction for nulling, a type of nulling or a duration of a transmission opportunity (TXOP) for the one or more stations of the set of stations of the first AP and the second AP to participate in CBF. The first AP can be configured to perform CBF together with the second AP subsequent to the coordination, wherein the CBF is performed with respect to the one or more stations of the set of stations of the first AP and the second AP.

The method can perform sequence to identify or exchange a set of stations to use for CBF. The method can include the first AP performing a sequence with the second AP to exchange, between the first AP and the second AP, a set of stations of the first AP and a set of stations of the second AP to use for CBF. The sequence can include a TXOP communication, such as a per-TXOP coordination. For instance, identified STAs can be used for subsequent TXOP, and this operation can be repeated for a different TXOP. For instance, each AP can identify, exchange or utilize parameters for CBF transmission.

The parameters can include any one or more of a direction for nulling, a type of nulling or a duration of a transmission opportunity (TXOP) for one or more stations of the set of stations of the first AP or the set of stations of the second AP. For instance, each AP can identify a number of spatial streams (Nss) that it can use to communicate with each of its identified stations. The set of stations can be determined from the one or more candidate stations based at least on the capabilities or scheduled data traffic at its associated AP. The first AP can implement full-rank nulling or partial-rank nulling with respect to a first station of the set of stations selected for CBF. The nulling can be implemented for the given station using or responsive to the BSS color and a value in the common AID space corresponding to the station. The nulling can be implemented responsive to CSI feedback obtained from the set of stations of the first AP or the set of stations of the second AP.

The method can include the first AP performing CBF with respect to a particular station, based on the coordination or communication to prepare the CBF operation using at least one of the common BSS color or the AID corresponding to that station. The first AP can perform CBF, based at least on, or using, the common MAC address for the first AP and the second AP. The method can include the first AP adjusting CBF responsive to the one or more characteristics, such as the information indicative of signal strength, signal quality, signal direction or channel conditions or performance. The method can include identifying of nulling directions at each AP based on the STAs and their respective Nss identified by each AP, as well as the CSI obtained from sounding (e.g., at 615) for the identified STAs. The method can include each of the first AP and the second AP performing CBF to communicate data to its respective identified stations using the corresponding identified Nss, while simultaneously nulling interference towards the other AP's identified stations. The method can include each of the identified stations signaling the outcome of the performed CBF operation, such as whether the station was able to correctly receive the intended data. The method can implement one or more operations 625 following operation 620. The method can implement one or more operations 625 following operation 615.

Upon completing the operations 605-625, the APs and the stations of the APs can utilize the configurations and setups implemented at 605-625 to implement data communications with partial-rank or full CBF. For instance, the first and the second AP can simultaneously transmit to their respective associated stations, with each AP beamforming its transmitted signals to minimize the interference caused to the stations of the other AP as those other stations receive their respective intended signals from their respective AP.

Referring now to FIG. 7 an example method 700 for identifying and exchanging station information between APs is illustrated. Method 700 can be implemented, using for example, system 200, system 500, or any of the features discussed in connection with FIGS. 1A-5. Method 700 can include acts 705-715. At 705, the method can include a first AP sending to second AP a poll frame. At 710, the method can include a short interframe space (SIFS). At 715, the method can include the second AP sending to first AP a response frame.

At act 705, the method can include the first AP sending to the second AP a poll frame. The poll frame can query the second AP whether there are any candidate STAs for CBF among the STAs associated to the second AP. For instance, the first and second APs can exchange information on stations expected to participate in one or more subsequent CBF transmission opportunities (TXOPs). The first AP can send to the second AP, any parameters discussed herein. For example, the first AP can send to the second AP information such as AID of each candidate STA associated to the first AP, the physical-layer capabilities (e.g., station capability data) of each candidate station, such as operating bandwidth, maximum number of receive spatial streams (e.g., Receive Nss), sounding-feedback capability, as well as the MAC capabilities and any padding preferences. A set of station groups can be identified using group-indices or information. Such indicates or information can include one or more lists of stations of the first AP, such as a list of STAs that is included in the basic service set (BSS) of the AP. Indices or information can include the number of spatial streams (Nss) that are allocated to each individual station (STA), such as STA in a multi-user MIMO setup. The Nss can determine or indicate the maximum number of parallel data streams a station can transmit or receive (e.g. per-STA Nss) for the given STA or the group of STAs. The indices or information can include a resource unit (RU) allocation or assignment of specific frequency ranges within a channel of a Wi-Fi AP (e.g., RU allocation) for a given STA or for the group of STAs. These individual or group-indices can serve as shorthand for future messages exchanged between the APs on a per-TXOP basis to identify and specify the settings or configurations of the individual groups of STAs. These groups can include STAs associated to the first AP, STAs associated to the second AP, or a mixture of both (e.g., STAs associated with both the first and the second APs).

For example, the method 700 can begin with the first AP and the second AP performing an initial frame exchange. For instance, the initial frame exchange can include the first AP can sending the second AP an RTS or an initial-control frame, and the second AP responding to the first AP with a CTS or an initial-response frame, upon receiving the RTS or initial control frame. The initial frame exchange can allow the first AP to determine whether the second AP is available for further communication. The initial frame exchange can serve the purpose of reserving the wireless medium to enable the further communication.

At act 710, the method can include short interframe space (SIFS). The SIFS can allow for the second AP to receive and process the received information. The second AP can determine the candidate stations for the second AP. For instance, the choice of candidate CBF stations of the second AP can depend on several factors such as whether a station associated with an AP currently has data traffic intended for it at the associated AP, the type of data traffic for that station, and the difference in path-loss observed at that station from its serving or associated AP versus the interfering AP (with which the station is not associated). For instance, if the path-loss difference observed at certain station, defined as the path-loss observed at that station from its serving or associated AP subtracted from the path-loss observed at that station from the interfering AP, is significant (e.g., above a predetermined threshold), the two APs can engage in concurrent transmissions to such station without explicit nulling, such as via a coordinated spatial reuse. An AP can signal the absence of any candidate CBF stations.

At act 715, the method can include the second AP sending to the first AP a response frame. The response frame can include any information about candidate stations of the second AP for CBF, for example in response to the query from the first AP in the poll frame at act 705. For instance, the method can include exchange having a poll-based sequence and an unsolicited notification sequence. In the poll-based sequence at 705, the first AP can poll the second AP for candidate stations for CBF using a query frame. In response to the poll frame, the second AP can provide a response frame with information for its stations. The information included, can include any parameters, including parameters pertaining to station or AP capabilities that can be used for CBF setup or configuration. The response frame can use the poll frame as a trigger frame specifying parameters for the second AP to include in the response frame. For instance, each AP could send unsolicited notifications to the other AP with STA information, with the receiving AP transmitting an ACK. Following the successful exchange of STA information, subsequent TXOPs may utilize this information for CBF operation, with either AP capable of initiating a subsequent CBF-TXOP based on the exchanged information.

Upon completing the operations 705-715, the APs and the stations of the APs can utilize the configurations and setups implemented at 705-715 to implement data communications with partial-rank or full CBF. For instance, the first and the second AP can simultaneously transmit to their respective associated stations, with each AP beamforming its transmitted signals to minimize the interference caused to the stations of the other AP as those other stations receive their respective intended signals from their respective AP.

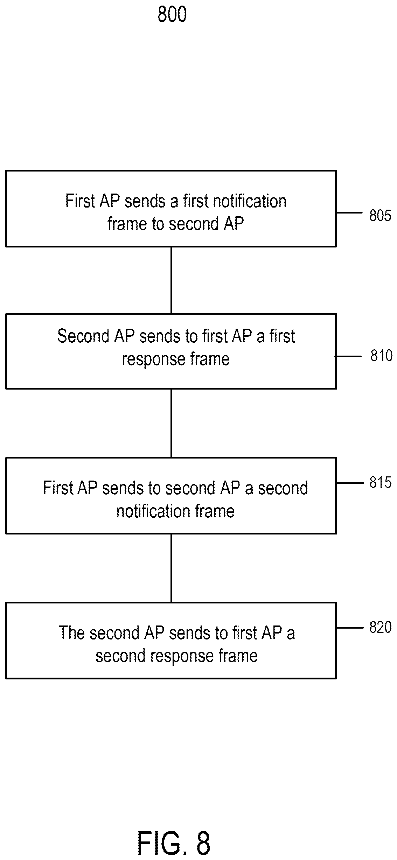

Referring now to FIG. 8 an example method 800 of providing an example of a set up sequence for CBF for multiple APs is illustrated. Method 800 can be implemented, using for example, system 200, system 500, or any of the features discussed in connection with FIGS. 1A-5. Method 800 can include acts 805-820. At 805, the method can include a first AP sending a first notification frame to a second AP. At 810, the method can include a second AP sending to first AP a first response frame. At 815, the method can include the first AP sending to second AP a second notification frame. At 820, the method can include the second AP sending to the first AP a second response frame. Frames transmitted as part of method 800 can belong to the same TXOP (e.g., neighboring or adjacent transmitted frames of method 800 can be separated by a gap of SIFS).

At act 805, the first AP can send a first notification frame to a second AP. For instance, the first AP can send a notification frame including a first list of participating stations associated with the first AP for the upcoming CBF TXOP. For example, the first list of participating stations can be chosen from the candidate stations previously identified by the first AP. For example, the first list of participating stations can include stations associated with the first AP for whom downlink channel-state information (CSI) has been previously obtained by the first AP and the second AP (e.g., by means of channel sounding, such as joint-sounding or sequential-sounding). The first list of participating stations can include stations for which the first AP has pending data traffic to transmit. The information conveyed can include any type and form of parameters discussed herein. The information can include, for example, for each station in the first list, a per-station AID, a number of spatial streams (Nss) and a resource unit (RU) allocation. These parameters can be used for coordinating the CBF operation. The first notification frame may also include padding to provide sufficient time for the second AP to identify its participating stations.

For example, the method 800 can begin with the first AP and the second AP performing an initial frame exchange. For instance, the initial frame exchange can include the first AP can sending the second AP an RTS or an initial control frame (e.g., initial notification frame), and the second AP responding to the first AP with a CTS or an initial-response frame (e.g., initial response frame), responsive to or upon receiving the RTS or the initial control frame. The initial frame exchange can allow the first AP to determine whether the second AP is available for further communication. The initial frame exchange can serve the purpose of reserving the wireless medium to enable the further communication.

At act 810, the second AP responds to the first notification frame by sending a first response frame to the first AP. The response can include any parameters, such as parameters indicative of any AP or station capabilities that can be used for CBF configuration. The first response frame can include a second list of participating stations associated with the second AP for the upcoming CBF TXOP. For example, the second list of participating stations can be chosen from the candidate stations previously identified by the second AP. For example, the second list of participating stations can include stations associated with the second AP for whom downlink channel-state information (CSI) has been previously obtained by the first AP and the second AP (e.g. by means of multi-AP sounding, such as joint-sounding or sequential-sounding). For example, the second list of participating stations can include stations for which the second AP has pending data traffic to transmit in the upcoming TXOP. Similar to the first notification frame, the first response frame can include per-station AIDs, Nss and RU data for stations of the second BSS in the second list. If no stations are available for CBF, the first response frame can include a "No STA" indication. For instance, both the first notification and first response frames may include padding to ensure sufficient time for processing and preparation. The MCS of a participating STA may depend on the set of other participating STAs can be grouped with and may be computed on-the-fly or looked up from a previously computed table of MCS for different groups of STAs. Additionally, the first response frame can be transmitted within a period of a short interframe space (SIFS) from the end of the first notification frame to facilitate timely communication between the APs.

At act 815, the method can include the first AP sending to the second AP a second notification frame. For instance, upon receiving the first response frame without a "No STA" indication, the first AP can send a second notification frame that can include information for constructing the preamble of the CBF PPDU (Physical-layer Protocol Data Unit). Such information can include the per-station MCS for the first list of participating stations associated with the first AP, CBF PPDU duration, GI-LTF choice or value, number of LTFs, or other data. Additionally, the second notification frame can signal the TXOP duration for the remainder of the TXOP. The second notification frame can provide information for subsequent initial control frames, including user-info fields for the first AP's stations.

A user-info field, or a user information field, can include any fields for a data structure or a control frame that can include values or parameters or details about individual STAs (e.g., users) associated with an AP. The user-info field can include, for example a STA identifier (e.g., a unique parameter or value for a station device, such as an AID), a spatial stream information (e.g., a number of spatial streams allocated to a station device), an MCS data (e.g., parameters for data rate or robustness of communication for a station device), a resource allocation data (e.g., information about an allocated resource unit for OFDMA), a power control setting (e.g., parameters for power levels for a station) or antenna configuration (e.g., data on how antennas are setup or configured for beamforming). Padding can be included to facilitate sufficient time for the second AP to process the frame. This frame can signal whether the initial control frame should be transmitted. This frame can signal the amount of padding for the initial control frame. Additionally, the second notification frame can be transmitted within a period of a short interframe space (SIFS) from the end of the first response frame to facilitate timely communication between the APs.

At act 820, the method can include the second AP sending to the first AP a second response frame. For instance, upon receiving the second notification frame, the second AP can send a second response frame to the first AP. The second AP can include in the second response frame any parameters, such as parameters of any AP or station capabilities. This frame can include details such as the TXOP duration for the remainder of the TXOP or additional information for constructing the preamble of the CBF PPDU (for example, the per-station MCS for the second list of participating stations associated with the second AP). Similar to the second notification frame, the second response frame can contain information for subsequent initial control frames and padding for facilitating adequate processing time. The presence of the second response frame can be pre-negotiated between the APs or signaled in preceding frames within the TXOP. It may signal any increase to the amount of padding needed for the initial control frame. Additionally, the second response frame can be transmitted within a period of a short interframe space (SIFS) from the end of the second notification frame to facilitate timely communication between the APs.

Upon completing the operations 805-820, the APs and the stations of the APs can utilize the configurations and setups implemented at 805-820 to implement data communications with partial-rank or full CBF. For instance, the first and the second AP can simultaneously transmit to their respective associated stations, with each AP beamforming its transmitted signals to minimize the interference caused to the stations of the other AP as those other stations receive their respective intended signals from their respective AP.

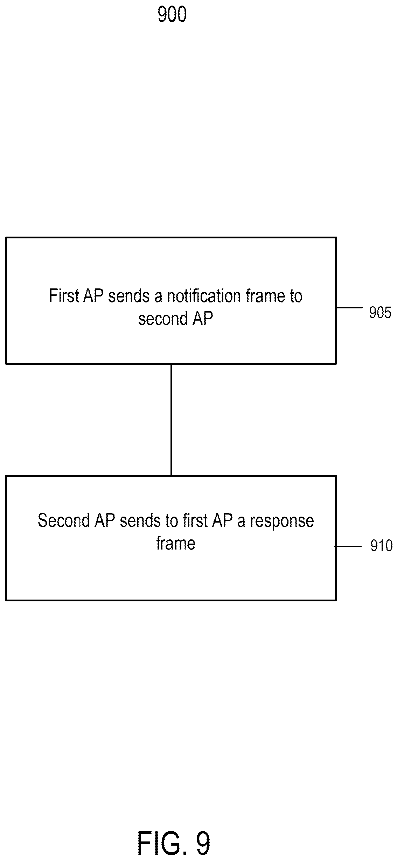

Referring now to FIG. 9 an example method 900 of providing another example of a set up sequence for CBF for multiple APs is illustrated. Method 900 can be implemented, using for example, system 200, system 500, or any of the features discussed in connection with FIGS. 1A-5. Method 900 can include acts 905-910. At 905, the method can include a first AP sending a notification frame to a second AP. At 910, the method can include the second AP sending a response frame to the first AP. Frames transmitted as part of method 900 can belong to the same TXOP (e.g., neighboring or adjacent transmitted frames of method 900 can be separated by a gap of SIFS)

At act 905, the method can include the first AP initiating a sequence by sending a notification frame to the second AP. The notification frame can be a type-1 notification frame. The type-1 notification frame can include a list of possible station groups for the upcoming CBF TXOP. Each station group can comprise one or more stations associated with each AP. For example, the stations in a station group can be chosen from among the candidate stations previously identified by each AP. For example, the stations in a station group can be chosen from among stations for whom downlink channel-state information (CSI) has been previously obtained by the first AP and the second AP (e.g. by means of channel sounding, such as joint-sounding or sequential-sounding). For example, the stations in a station group that are associated with the first AP can be chosen from among stations for which the first AP has pending data traffic to transmit in the upcoming TXOP. Each group can contain one or more of per-station AID, per-station Nss and per-station RU indication or data, for each station in the station group. Group data for each grouping of stations, can include any per station MCS information (e.g., MCS information for each individual station of the group). Group data for each grouping of stations can include per station CBF PPDU duration (e.g., duration or length of time interval of the CBF PPDU).

For instance, the type-1 notification frame can contain the information used to construct the preamble of the corresponding CBF PPDU, such as MCS information, information on CBF PPDU duration, and other parameters. The MCS information can include, for each station group in the list, the per-station MCS for stations in that group that are associated with the first AP. The type-1 notification frame can include information for subsequent initial control frames, including user-info fields for the first AP's stations and MU-RTSBSRP, facilitating comprehensive communication between the APs. Padding can be included to provide the second AP sufficient time to identify the preferred group and prepare a response for the first AP.

At act 905, the method can alternatively include the first AP commencing the sequence by transmitting a type-2 notification frame to the second AP in which the first AP only lists its own stations. The type-2 notification frame can include an inclusive list of first AP stations participating in the upcoming TXOP, which may convey information (e.g., parameters) such as per-station AID, Nss, and RU indication. The list of first AP's stations can be chosen from among the candidate stations previously identified by the first AP. The list of first AP's stations can be chosen from among stations for whom downlink channel-state information (CSI) has been previously obtained by the first AP and the second AP (e.g. by means of channel sounding, such as joint-sounding or sequential-sounding). The list of first AP's stations can be chosen from among stations for which the first AP has pending data traffic to transmit in the upcoming TXOP. Additionally, the type-2 notification frame can include information to construct the preamble of the CBF PPDU, such as per-station MCS information, CBF PPDU duration, GI-LTF choice, and the number of LTFs. Furthermore, the type-2 notification frame can include details for subsequent initial control frames, including common info fields and user-info fields for the first AP's stations. Padding may be included in the type-2 notification frame to ensure that the second AP has sufficient time to prepare a response for AP1.

For example, the method 900 can begin with the first AP and the second AP performing an initial frame exchange. For instance, the initial frame exchange can include the first AP can sending the second AP an RTS or an initial-control frame, and the second AP responding to the first AP with a CTS or an initial-response frame, upon receiving the RTS or initial control frame. The initial frame exchange can allow the first AP to determine whether the second AP is available for further communication. The initial frame exchange can serve the purpose of reserving the wireless medium to enable the further communication.

At act 910, the second AP can respond to the notification frame by transmitting a response frame to the first AP. The response frame can be transmitted within a period of a short interframe space (SIFS) from the end of the notification frame. The response frame can be a type-1 response frame. The type-1 response frame can be transmitted in response to a type-1 notification frame. The type-1 response frame can indicate a preferred station group among the list of groups signaled in the notification frame. The second AP can identify a preferred station group based on stations for which the second AP has pending data traffic to transmit in the upcoming TXOP. In cases where no preferred group is identified, the type-1 response may signal "no group." The type-1 response frame can include the TXOP duration for the remainder of the CBF TXOP. If a preferred group is identified, the type-1 response frame can include additional information to construct the preamble of the CBF PPDU for the participating STAs of the second AP (such as per-station MCS). The type-1 response frame can include information for subsequent initial control frames including MU-RTSBSRP. The type-1 response frame can include padding to provide adequate processing time. The padding can provide either AP sufficient time to finish precoder computation in time for CBF PPDU transmission, facilitating seamless communication between the APs.

The second AP can respond to the notification frame from the first AP by transmitting a type-2 response frame. The type-2 response frame can be transmitted in response to a type-2 notification frame. The type-2 response frame can include a list of second AP stations. Upon receiving the type-2 notification frame, the second AP can transmit a type-2 response frame to the first AP, indicating the list of participating stations of the second AP for the upcoming TXOP. This list can include per-station AID, Nss, and RU indication, providing comprehensive information for the first AP to proceed with the CBF TXOP. The list of second AP's stations can be chosen from among the candidate stations previously identified by the second AP. The list of second AP's stations can be chosen from among stations for whom downlink channel-state information (CSI) has been previously obtained by the first AP and the second AP (e.g. by means of multi-AP sounding, such as joint-sounding or sequential-sounding). The list of second AP's stations can be chosen from among stations for which the second AP has pending data traffic to transmit in the upcoming TXOP. If no participating STAs of the second AP are available, the response frame can include a "No STA" indication. The type-2 response frame can signal the TXOP duration for the remainder of the CBF TXOP. If at least one participating station of the second AP is identified, the type-2 response frame can include additional information needed to construct the preamble of the CBF PPDU (such as per-station MCS for the participating stations of the second AP). The type-2 response frame can include information for subsequent initial control frames including MU-RTSBSRP. The type-2 response frame can include padding to allow for adequate processing time for the first AP or the second AP. This comprehensive response facilitates seamless communication between the APs, ensuring efficient CBF operation.

Upon completing the operations 905-910, the APs and the stations of the APs can utilize the configurations and setups implemented at 905-910 to implement data communications with partial-rank or full CBF. For instance, the first and the second AP can simultaneously transmit to their respective associated stations, with each AP beamforming its transmitted signals to minimize the interference caused to the stations of the other AP as those other stations receive their respective intended signals from their respective AP.

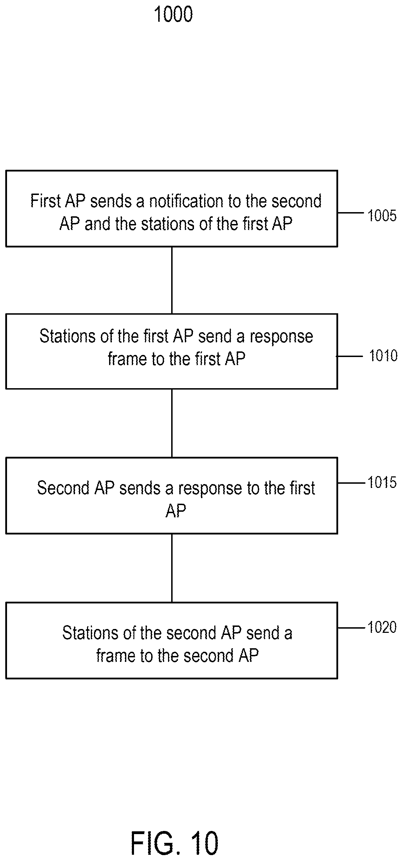

Referring now to FIG. 10, an example method 1000 of providing a CBF set up sequence (e.g., in a per-TXOP coordination stage) for setting up CBF for multiple APs, is illustrated. Method 1000 can be implemented, using for example, system 200, system 500, or any of the features discussed in connection with FIGS. 1A-5. Method 1000 can include acts 1005-1020. At 1005, the method can include a first AP sending a notification to the second AP and the stations of the first AP. At 1010, the method can include the stations of the first AP sending a response frame to the first AP. At 1015, the method can include the second AP sending a response to the first AP. At 1020, the method can include the stations of the second AP sending response to the second AP. Frames transmitted as part of method 1000 can belong to the same TXOP (e.g., neighboring or adjacent transmitted frames of method 1000 can be separated by a gap of SIFS)

At act 1005, the method can include the first AP initiating the CBF-setup sequence by transmitting a notification frame to the second AP and the stations of the first AP. This notification can include one or more frames that can inform the second AP about the opportunity for CBF-TXOP and can notify candidate stations of the first AP of the upcoming CBF-TXOP. The notification frame can include an AP-notification component intended for the second AP. The notification frame can include a STA-notification component intended for one or more stations of the first AP. The notification frame can include a list of stations of the first AP selected for the upcoming CBF-TXOP and can provide details such as per-station AID, Nss, and RU indication, to facilitate subsequent data transmission to these stations. The notification frame can also include information on the amount of padding that it can provide within the transmissions to allow receiving devices (e.g., APs or STAs) additional processing time before they provide their responses.

The notification frame can include padding to allow sufficient time for the second AP to prepare a response for the first AP, or for the stations of the first AP to respond. For instance, the first AP can receive from the second AP (e.g., via a prior transmission) a desired amount of padding, which the first AP can utilize to form the notification frame to grant the second AP the desired or requested processing or response time. The AP-notification component can notify the second AP about the opportunity for CBF-TXOP. The type of AP-notification may include or follow that of either a notification frame of CBF-setup sequence discussed in connection with operation 705 of method 700, operation 805 of method 800 or operation 905 of operation 900. The type of AP-notification signaled can be indicated in the frame or can be negotiated previously between the APs (for example, during configuration of CBF operation). The STA-notification component can notify one or more candidate stations of the first AP of the upcoming CBF-TXOP. The STA-notification can serve as an initial control frame (e.g., MU-RTS/BSRP) preceding the CBF-TXOP for the stations of the first AP. The stations of the first AP can be chosen from among the candidate stations for CBF previously identified by the first AP. The stations of the first AP can be chosen from among stations for whom downlink channel-state information (CSI) has been previously obtained by the first AP and the second AP (e.g. by means of channel sounding, such as joint-sounding or sequential-sounding). The stations of the first AP can be chosen from among stations for which the first AP has pending data traffic to transmit in the upcoming TXOP.

For example, the method 1000 can begin with the first AP and the second AP performing an initial frame exchange. For instance, the initial frame exchange can include the first AP can sending the second AP an RTS or an initial-control frame, and the second AP responding to the first AP with a CTS or an initial-response frame, upon receiving the RTS or initial control frame. The initial frame exchange can allow the first AP to determine whether the second AP is available for further communication. The initial frame exchange can serve the purpose of reserving the wireless medium to enable the further communication.

At act 1010, the method can involve the transmission of a response frame to the first AP. The response frame can be transmitted after a period of SIFS from the end of the notification frame from act 1005. The response frame can be a response-1 frame, which can be transmitted in response to receiving the notification frame at act 1005. The response-1 frame can include any station capabilities data or any other parameters corresponding to or involving CBF functionality of the stations of the first AP. The response frame can include padding to allow sufficient time for the first AP to process the data. The stations of the first AP can transmit a response-1 frame to the first AP. Upon receiving the notification frame, one or more stations of the first AP that are notified by the notification frame can transmit the response-1 frame to the first AP. A station can transmit the response-1 frame to indicate its availability for the CBF TXOP. The STAs of the first AP that receive the notification frame and transmit response-1 frame may remain in receive-mode on the same link for a minimum timeout period. The minimum timeout period can be previously negotiated with the first AP after the response-1 frame. Such a STA can exit this state after the timeout period if it detects no CBF PPDU within the timeout period. In some configurations, the second AP can also transmit a response-1 frame to the first AP to acknowledge receiving the notification frame from the first AP. The second AP can transmit a response-1 frame concurrently with the response-1 frame transmitted by one or more stations of the first AP. A response-1 frame transmitted by the second AP can occupy a frequency-subband, an RU or a spatial-stream that is not otherwise occupied by the response-1 frame transmitted by the stations of the first AP, which can allow the first AP to distinguish the second AP's response-1 frame from the response-1 frame transmitted by the first AP's stations.

At act 1015, the second AP can transmit a notification frame. The notification frame can be transmitted after a period of SIFS from the end of the response frame from act 1010. The notification frame can be transmitted by the second AP to the first AP. For instance, the second AP can send to the first AP any AP capabilities data or any other parameters corresponding to or involving CBF functionality of the second AP. The notification frame can be transmitted by the second AP to one or more stations of the second AP (e.g., if any STAs of the second AP are identified for CBF-operation in the same TXOP). The notification frame can include an AP-response component intended for the first AP. The notification frame can include a STA-notification component intended for one or more stations of the second AP. The second AP can respond to the notification frame from the first AP at act 1005 by including an AP-response to the first AP in the notification frame transmitted by the second AP. The AP-response can serve to address the first AP's notification frame and can include a list of participating stations of the second AP for this TXOP, conveying per-station AID, Nss, and RU indication. If no such stations are available at the second AP, the AP-response can include a "No STA" indication. The notification frame can include padding to allow sufficient time for the first AP to process the data. For instance, the second AP can receive from the first AP (e.g., via a prior transmission) a desired amount of padding, which the second AP can utilize to form the notification frame to grant the first AP the desired or requested processing or response time.

The type of AP-response may include or follow that of the response frame of CBF-setup sequence of method 700 (e.g., at 715), 800 (e.g., at 810) or 900 (e.g., at 910), with the type of response selected to match the type of AP-notification in operation 1005 (for example, an AP-response type corresponding to 715 can be selected to match an AP-notification type corresponding to 705, or an AP-response type corresponding to 810 can be selected to match an AP-notification type corresponding to 805, or an AP-response type corresponding to 910 can be selected to match an AP-notification type corresponding to 905). The second AP can send the STA-notification to the stations of the second AP, such as any candidate stations that may be identified for CBF operation in this TXOP. The STA-notification frame can notify any STAs of the second AP identified for this CBF TXOP by serving as an initial control frame (e.g., MU-RTS/BSRP). The notification frame transmitted by the second AP can include padding to provide sufficient time for either AP to prepare for CBF PPDU transmission or for the stations of the second AP to respond. The stations of the second AP can be chosen from among the candidate stations for CBF previously identified by the second AP. The stations of the second AP can be chosen from among stations for whom downlink channel-state information (CSI) has been previously obtained by the first AP and the second AP (e.g. by means of channel sounding, such as joint-sounding or sequential-sounding). The stations of the second AP can be chosen from among stations for which the second AP has pending data traffic to transmit in the upcoming TXOP.

At act 1020, any stations of the second AP addressed by the notification frame at act 1015 can transmit their own response frame upon receiving the notification frame from the second AP at act 1015. If no stations of the second AP are identified, this frame can be absent. This response frame, if transmitted, can follow the notification frame transmitted at act 1015 after a period of SIFS. For instance, the stations of the second AP can send to the second AP any station capabilities data or any other parameters corresponding to or involving CBF functionality of the stations of the second AP. The stations of the second AP addressed by the STA-notification component of the notification frame at act 1015, can transmit a response frame, such as a response-2 frame, responsive to receiving the notification frame.

For example, when the types of AP-notification and AP-response in 1005 and 1015 respectively follow those of the first notification frame at step 805 and first response frame at step 810 of CBF-setup sequence as discussed in connection with method 800, then the following frames can be exchanged SIFS after the final frame in the above exchange. For example, the second notification frame at step 815 of the CBF-setup sequence discussed in connection with method 800 can be transmitted by the first AP to the second AP. For example, the second response frame at step 820 of CBF-setup sequence of the method 800 can be transmitted by the second AP to the first AP.

Upon completing the operations 1005-1020, the APs and the stations of the APs can utilize the configurations and setups implemented at 1005-1020 to implement data communications with partial-rank or full CBF. For instance, the first and the second AP can simultaneously transmit to their respective associated stations, with each AP beamforming its transmitted signals to minimize the interference caused to the stations of the other AP as those other stations receive their respective intended signals from their respective AP.

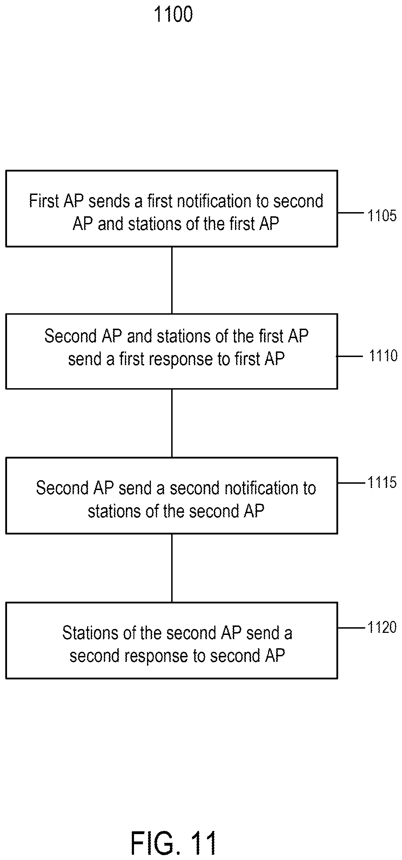

Referring now to FIG. 11 an example method 1100 of providing another example of a set up sequence for CBF for multiple APs is illustrated. Method 1100 can be implemented, using for example, system 200, system 500, or any of the features discussed in connection with FIGS. 1A-5. Method 1100 can include acts 1105-1120. At 1105, the method can include a first AP sending a first notification to a second AP and stations of the first AP. At 1110, the method can include the second AP and stations of the first AP sending a first response to the first AP. At 1115, the method can include the second AP sending a second notification to stations of the second AP. At 1120, the method can include the stations of the second AP sending a second response to the second AP. Frames transmitted as part of method 1100 can belong to the same TXOP (e.g., neighboring or adjacent transmitted frames of method 1100 can be separated by a gap of SIFS)

At act 1105, the method can include the first AP commencing the setup sequence by transmitting one or more first notification frames to the second AP and to the stations of the first AP. The one or more first notification frames can inform the second AP about the opportunity for CBF-TXOP. The one or more first notification frames can notify one or more stations of the first AP about the upcoming CBF-TXOP. The first notification frame can include details relevant for the CBF TXOP such as per-station AID, Nss, and RU indication for the first AP's stations. The first notification frame can specify that the response to the first notification should be in TB PPDU format. The first notification frame can specify the parameters for each addressed device (e.g., TX parameters for second AP, stations of the first AP) needed for transmitting the response in TB PPDU format. Additionally, padding can be included in the first notification frame to provide sufficient time for the second AP or the one or more stations of the first AP to respond. The amount of padding can be determined, for example, based on previously communicated AP capabilities data, which can indicate the amount of padding preferred or requested by the second AP. The stations of the first AP can be chosen from among the candidate stations for CBF previously identified by the first AP. The stations of the first AP can be chosen from among stations for whom downlink channel-state information (CSI) has been previously obtained by the first AP and the second AP (e.g. by means of channel sounding, such as joint-sounding or sequential-sounding). The stations of the first AP can be chosen from among stations for which the first AP has pending data traffic to transmit in the upcoming TXOP.

The first notification frame can be notification-1 frame. For instance, the first AP can notify the second AP of opportunity for CBF-TXOP using a notification-1 frame. The notification-1 frame can include or follow a notification frame of CBF-setup sequence, such as the one discussed in connection with operation 705 of method 700, operation 805 of method 800 or operation 905 of method 900. The type of notification signaled can be indicated in the frame, or negotiated previously between the APs (for example, during configuration of CBF operation). For instance, notification frame-1 can notify STAs of the first AP of upcoming CBF-TXOP (such as those participating in the upcoming CBF-TXOP) by serving as an initial control frame (e.g., MU-RTS or BSRP). The notification frame-1 can specify that the response should be in TB PPDU format. The Notification frame-1 can specify the parameters of the response for each addressed device (second AP, stations of the first AP). The notification frame-1 can include padding to provide sufficient time for the second AP or stations of the first AP to respond.

For example, the method 1100 can begin with the first AP and the second AP performing an initial frame exchange. For instance, the initial frame exchange can include the first AP sending to the second AP an RTS or an initial-control frame, and the second AP responding to the first AP with a CTS or an initial-response frame, upon receiving the RTS or initial control frame. The initial frame exchange can allow the first AP to determine whether the second AP is available for further communication. The initial frame exchange can serve the purpose of reserving the wireless medium to enable the further communication.

At act 1110, the second AP or stations of the first AP can transmit one or more first response frames to the first AP in response to the one or more first notification frames. The one or more first response frames can be in TB PPDU format. A first response frame can address the first notification frame from the first AP and include relevant information regarding CBF operation. The first response frame transmitted by the second AP can follow the type of response selected to match the type of notification in act 1105. The first response frame by the second AP can include an amount of padding that can be identified from previously communicated AP capabilities data identifying the desired or requested amount of padding to allow the first AP a sufficient processing time. Stations of the first AP that transmit the first response frame may remain in receive-mode on the same link for a pre-negotiated timeout period after transmitting the first response frame. Padding may be included to allow sufficient time for the first AP to process the response. The first response frame can be transmitted after a period of SIFS from the end of the first notification frame transmitted at act 1105.

The first response frame can include a response-1 frame. The response-1 frame can be transmitted to the first AP, by the second AP or stations of the first AP addressed by the notification-1 frame, in response to receiving the notification-1 frame. The response-1 frame can be transmitted in TB PPDU format. For instance, the response-1 frame can include any AP capabilities, any station capabilities, or any parameters corresponding to or involving CBF functionality of the second AP or stations of the first AP. The second AP can respond to the first AP. The type of the second AP's response may follow that of either a response frame of CBF-setup sequence discussed in connection with operation 715 of method 700, 810 of method 800 or 910 of method 900. The type of the response can be selected to match the type of the notification at 1005 (for example, a response type corresponding to 715 can be selected to match a notification type corresponding to 705, or a response type corresponding to 810 can be selected to match a notification type corresponding to 805, or a response type corresponding to 910 can be selected to match a notification type corresponding to 905). The STAs of the first AP that receive the notification-1 frame and transmit response-1 frame may need to remain in the receive-mode on the same link for a minimum timeout period (pre-negotiated with the first AP) after the response-1 frame. Such a STA may be permitted to exit this state after the timeout period if it detects (e.g., responsive to detecting) no CBF PPDU within the timeout period.

At act 1115, the second AP can transmit one or more second notification frames to any stations of the second AP. These stations can include any stations identified for CBF operation in this TXOP in the first notification or the first response. The stations of the second AP can be chosen from among the candidate stations for CBF previously identified by the second AP. The stations of the second AP can be chosen from among stations for whom downlink channel-state information (CSI) has been previously obtained by the first AP and the second AP (e.g. by means of channel sounding, such as joint-sounding or sequential-sounding). The stations of the second AP can be chosen from among stations for which the second AP has pending data traffic to transmit in the upcoming TXOP. The second notification can be sent according to the second AP's response in the first response frame. The second notification frame can serve as an initial control frame to notify any identified stations of the second AP about the upcoming CBF-TXOP. Padding can be included to provide sufficient time for either AP to prepare for CBF PPDU transmission and for stations of the second AP to respond. The second notification frames can include padding allowing the stations of the second AP a sufficient amount of time to process the data and provide any responses.

The second AP can send a notification-2 frame. The notification-2 frame can be transmitted by the second AP to any STAs of the second AP identified for CBF-operation in the same TXOP. The notification-2 frame can be issued according to the second AP's response that can be responsive to response-1 frame. If no STAs are identified, this frame can be omitted. Notification-2 frame can notify any STAs of the second AP identified for this CBF TXOP by serving as an initial control frame (e.g., MU-RTS/BSRP). The notification-2 frame can include padding to provide sufficient time for either AP to prepare for CBF PPDU, or for STAs of the second AP to respond. The second notification frame or the notification-2 frame can be transmitted after a period of SIFS from the end of the first response frame transmitted at act 1110.

At act 1120, any stations of the second AP addressed by the second notification frame can transmit a second response frame to the second AP upon receiving the second notification frame. This second response frame, if transmitted, can address the second notification frame. The second response frame can include information similar to that of the first response frame. For instance, the stations of the second AP can transmit any station capabilities, or any parameters corresponding to or involving CBF functionality of the stations of the second AP. Padding can also be included to provide sufficient time for either AP to prepare for CBF PPDU transmission. The second response frame can be transmitted after a period of SIFS from the end of the second notification frame transmitted at act 1115. The stations of the second AP can send a second response frame which can be a response-2 frame. The response-2 frame can be transmitted by any STAs of the second AP addressed by the notification-2 frame, responsive to receiving the notification-2 frame (e.g., from 1115). This frame can be omitted or absent if the notification-2 frame is not transmitted. This frame can be omitted or absent for STAs that have not received the notification-2 frame.

If the types of notification and response at 1105 and 1110 follow those of the first notification and the first response frames of CBF-setup sequence of method 800, then the following frames can be exchanged SIFS after the final frame in the preceding exchange (e.g., after the second response frame at act 1120). For example, a third notification frame, corresponding to the second notification frame of CBF-setup sequence at act 815 of method 800, can be transmitted by the first AP to the second AP. For example, a third response frame, corresponding to the second response frame of CBF-setup sequence at act 820 of method 800 can be transmitted by the second AP to the first AP.

Upon completing the operations 1105-1120, the APs and the stations of the APs can utilize the configurations and setups implemented at 1105-1120 to implement data communications with partial-rank or full CBF. For instance, the first and the second AP can simultaneously transmit to their respective associated stations, with each AP beamforming its transmitted signals to minimize the interference caused to the stations of the other AP as those other stations receive their respective intended signals from their respective AP.

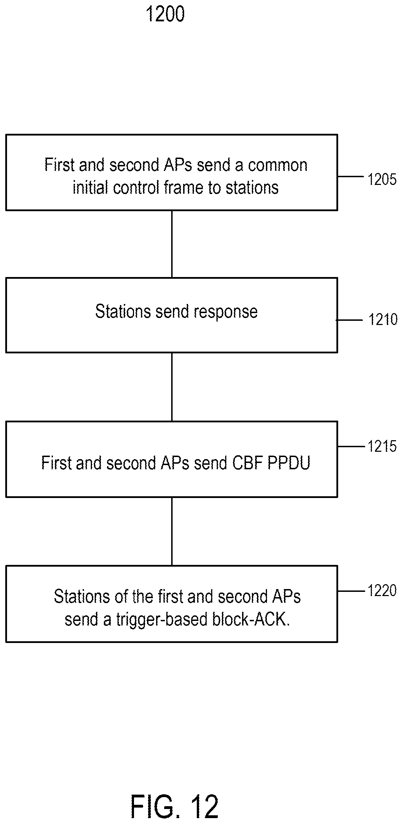

Referring now to FIG. 12 an example method 1200 of providing a CBF data sequence for multiple APs is illustrated. Method 1200 can be implemented, using for example, system 200, system 500, or any of the features discussed in connection with FIGS. 1A-5. Method 1200 can include acts 1205-1220. At 1205, the method can include a first AP and a second AP sending a common initial control frame to stations. At 1210, the method can include the stations transmitting a response. At 1215, the method can include the first AP and the second AP sending a CBF PPDU. At 1220, the method can include the stations sending a trigger-based block acknowledgement. Frames transmitted as part of method 1200 can belong to the same TXOP (e.g., neighboring or adjacent transmitted frames of method 1200 can be separated by a gap of SIFS)

At act 1205, the method can include both the first AP and the second AP sending one or more Common Initial Control (CIC) frames to the stations of the first and the second AP. In the configurations in which more than two APs are utilized, it is understood, that the APs can transmit CIC frames to any stations of the APs involved. The one or more CIC frames can be transmitted either by the first AP, the second AP, or simultaneously by both APs. CIC frame can be addressed to the stations participating in the CBF TXOP. The APs may coordinate on which AP(s) will transmit this frame. This transmission can occur or be negotiated during CBF-setup, configuration of CBF operation, or initial handshake. The CIC frame can be transmitted in non-high-throughput (non-HT) PPDU format, with contents determined by the preceding CBF-setup frame exchange. If transmitted by both APs, the responding AP can align its transmit-CFO and timing relative to the TXOP initiating AP.

For example, the first and the second APs can transmit a CIC frame, such as a MU-RTS or BSRP. The CIC frame can be transmitted either by the first AP, the second AP or both the first and the second APs. The APs can coordinate on which AP will transmit this frame, during either the CBF-setup, or during the configuration of the CBF operation, or during the initial AP identification or handshake. The CIC frame can be generated or provided in a non-HT PPDU format, with contents determined by preceding CBF-setup frame exchange. If transmitted by both the first and the second APs, the responding AP can align its transmit-CFO and timing relative to the TXOP initiating AP, such as by using the received frames during CBF-setup as reference. The CIC frame can include a single common MAC address (e.g., as identified from prior negotiation) that can be recognized or understood by one or more stations associated with either AP (e.g., by one or more of the candidate CBF stations of each AP that are addressed by the CIC frame).

For example, the method 1200 can begin with the first AP and the second AP performing an initial frame exchange. For instance, the initial frame exchange can include the first AP can sending the second AP an RTS or an initial-control frame, and the second AP responding to the first AP with a CTS or an initial-response frame, upon receiving the RTS or initial control frame. The initial frame exchange can allow the first AP to determine whether the second AP is available for further communication. The initial frame exchange can serve the purpose of reserving the wireless medium to enable the further communication.

At act 1210, the stations transmit one or more responses, responsive to the CIC frame of act 1205. For instance, the stations can transmit a joint response, such as a CTS or BSR, in response to receiving the Common Initial Control Frame. The one or more responses can be transmitted individually by stations or jointly and can correspond to, or be sent on behalf of, all of the first AP's and the second AP's stations that are addressed by the CIC frame. The stations set the receiver address field of the response equal to the transmitter address field of the preceding CIC frame.

The stations can provide a response, such as a CTS or BSR. The response can be transmitted jointly by STAs of the first AP and the second AP that are addressed by common initial control frame, in response to receiving such a frame. The STAs can set the RA field of the response equal to the TA field of the preceding common initial control frame. The response to an MU-RTS can include a CTS and the response to a BSRP can include a BSR. The response frame at 1210 can follow the CIC frame at 1205 after a period of SIFS. The response frame can include a single common MAC address (e.g., as identified from prior negotiation) that can be recognized or understood by either AP.

At act 1215, the first AP and the second AP can transmit one or more beamforming data units (BDUs), such as a CBF PPDU. For instance, the first and the second APs can transmit a CBF PPDU, either following a pause (e.g., SIFS) after receiving the response in act 1210 (e.g., when the frames in act 1205 and act 1210 are optionally transmitted), or pause (e.g., SIFS) after the last frame in the CBF-setup sequence. In some instances, the CBF PPDU can be preceded by a CBF-trigger frame. The CBF-trigger can be followed after SIFS by the CBF PPDU. The CBF-trigger can be transmitted by the first AP or the second AP. The CBF-trigger can be transmitted either following a pause (e.g., SIFS) after the response in act 1210 (e.g., when the frames in act 1205 and act 1210 are optionally transmitted), or pause (e.g., SIFS) after the last frame in the CBF-setup sequence. The CBF-trigger can be a short control frame (e.g. a CTS frame). The CBF-trigger can include a single common MAC address (e.g., as identified from prior negotiation) that can be recognized or understood by either AP or by one or more stations associated with either AP (e.g., by one or more of the candidate CBF stations of each AP that are addressed by the CIC frame at act 1205). The two APs can align their transmissions. For instance, the responding AP can align its transmit-CFO or timing relative to the TXOP initiating AP, using the received frames during CBF-setup as a reference. When a CBF-trigger is transmitted, it can also serve to align the APs transmissions for the subsequent CBF PPDU (e.g., an AP that receives the CBF-trigger can align its transmit-CFO or timing relative to the AP transmitting the CBF-trigger). The payload portion of the CBF PPDU transmitted by each AP can be beamformed to minimize interference to the other AP's stations. The preamble of the CBF PPDU can additionally identify the participating APs. The preamble of the CBF PPDU can signal that spatial reuse is disallowed.

The first and the second APs can transmit a CBF PPDU. The CBF PPDU can be transmitted jointly by both APs. The CBF PPDU can be transmitted SIFS after receiving the response in 1210 (e.g., when the frames in step 1205 and 1210 are transmitted), or SIFS after the last frame in the CBF-setup sequence, or SIFS after a CBF-trigger frame (such as a CBF-trigger transmitted by one of the APs). The responding AP can align its transmit-CFO and timing relative to the TXOP initiating AP (e.g., by using the received frames during CBF-setup as reference). The payload portion of the CBF PPDU transmitted by each AP can be beamformed with full-rank or partial-rank nulling so as to minimize interference to the other AP's STAs. A portion of the preamble of the CBF PPDU can be transmitted by both APs without nulling. This portion of the preamble can be sent with identical content by both APs, in order to avoid incorrect decoding at each STA due to interference when the content is not identical. The BSS color field in the preamble can be populated with the common BSS color selected at the time of configuration of CBF operation. The preamble of the CBF PPDU can additionally identify the participating APs. The preamble of the CBF PPDU can additionally signal that spatial reuse is disallowed. The CBF PPDU at 1215 can be transmitted after a period of SIFS from the end of the response transmitted at 1210.

At act 1220, the stations of all APs to which the CBF frame is transmitted can send a block acknowledgement. For instance, both AP's stations can send a Trigger-based Block-ACK in TB PPDU format. Each station can provide feedback with a Block-ACK, indicating whether the MPDUs addressed to it in the CBF PPDU were received correctly. Stations can avoid interfering with each other by transmitting on non-overlapping RUs or on separate spatial streams. The preamble of the TB PPDU can signal a BSS color identical to the one signaled in the preamble of the CBF PPDU.

The STAs of the first and the second AP can send a Trigger-based Block-ACK, which can be transmitted in TB PPDU format. Each STA can feedback a Block-ACK, indicating whether the MPDUs addressed to it in the CBF PPDU were received correctly. For instance, STAs can avoid interfering with each other by transmitting on non-overlapping RUs or on independent spatial streams. For example, the preamble of the TB PPDU may signal a BSS color identical to the one signaled in the preamble of the CBF PPDU. The transmission at 1220 can follow the CBF PPDU at 1215 after a period of SIFS.

Upon completing the operations 1205-1220, the APs and the stations of the APs can utilize the configurations and setups implemented at 1205-1220 to implement data communications with partial-rank or full CBF. For instance, the first and the second AP can simultaneously transmit to their respective associated stations, with each AP beamforming its transmitted signals to minimize the interference caused to the stations of the other AP as those other stations receive their respective intended signals from their respective AP.

A CBF data sequence, such as the one discussed in connection with the method 1200, can begin after a CBF-setup sequence, such as any one of the methods 700-1100, within the same TXOP (for e.g., either SIFS after the CF-setup sequence, or possibly with other frames in between, wherein adjacent frames can be separated by SIFS). For example, CBF data sequence can begin when APs have identified at least one participating STA each during the CBF-setup sequence. For instance, during the CBF-setup sequence, if the responding AP provides a "No STA" or a "No group" indication to the TXOP-initiating AP, then CBF-operation does not occur for this TXOP. In such cases, the TXOP-initiating AP may continue to service its STAs in the same TXOP (SIFS after the CBF-setup sequence), but without CBF.

A CBF TXOP can include a combination of CBF transmissions (e.g., in which transmissions are done in accordance with CBF) and non-CBF transmissions (e.g., in which transmissions do not involve CBF). Such combination of non-CBF and CBF transmissions can be implemented in three phases. In a first phase, the APs can identify a time T during an upcoming TXOP at which CBF communications can begin. In a second phase, one or more APs can commence non-CBF communications until the time T. At a third phase, once time T occurs, the CBF communications can begin and be used for the remainder of the TXOP, or any portion of the TXOP during which the participating APs choose to perform using CBF.

In a first phase, the first AP can query the second AP on whether the second AP will participate in CBF in an upcoming TXOP. The first AP can also signal the TXOP duration to the second AP. The second AP can respond with an indication of a future time T within this TXOP when it will be able to participate in CBF. For instance, the second AP can defer its participation in CBF based on information or knowledge that its candidate CBF STAs are currently unavailable or unable to receive one or more CBF transmissions directed to them, and that they may become available at a future time (e.g., time T). The first phase can be accomplished, using for example, 1005 or 1010 of method 1000, such as the first AP transmitting, in 1005, a request or inquiry to second AP on whether the second AP will participate in CBF, and the second AP notifying the first AP, at 1010, of the future time T at which the second AP can start participating in CBF. In some instances, the first phase can include acts 1005, 1010, 1015 of method 1000, in which the second AP does not notify AP2-STAs, but includes an indication of the future time T in its response to first AP in act 1015. In some instances, the first phase can include acts 1105, 1110 of method 1100, in which the second AP includes an indication of the future time T in its response to the first AP at act 1110.

In the second phase, following the second AP's response from the first phase, the first AP can commence one or more non-CBF transmissions to its STAs, with total duration lasting until time T (e.g., when the CBF transmission is set to begin). The second phase can include acknowledgements (ACKs) transmitted by the stations of the first AP (AP1-STAs) to the first AP in response to the non-CBF transmissions from the first AP.

In the third phase, after the time T, the first AP and the second AP can perform the CBF transmissions. The third phase can be accomplished, for example, by the first AP sending a notification to the second AP to signal the end of the second phase and initiate the CBF transmissions. For example, the second AP can infer the end of the second phase from the exchange between the first AP and the stations of the first AP. For example, the first AP and the second AP can coordinate the exchange in which the stations of the first AP and the stations of the second AP can participate in CBF, via for example, acts 1005, 1010 and 1015 of method 1000, or via acts 1105 and 1110 of method 1100. For example, the second AP can perform a handshake with the stations of the second AP of upcoming CBF transmissions, via for example, acts 1015 and 1020 of method 1000 or via acts 1115 and 1120 of method 1100.

Following the end of a CBF-data sequence, such as a SIFS after the end of the sequence, or within the same TXOP, or continuing the TXOP, one or more actions can be implemented or occur. For instance, the TXOP initiating AP can commence a new CBF-setup sequence, such as sequences described by methods 700, 800, 900, 1000, or 1100. For instance, a second CBF-data sequence can be initiated, such as the sequence described by method 1200. The second CBF-data sequence can follow the new CBF-setup sequence. The TXOP initiating AP may continue the TXOP with a non-CBF exchange. The TXOP initiating AP may end the TXOP by not transmitting, allowing devices to contend for the medium (including itself).

Several different types of sounding sequences can be utilized within the context of CBF. For instance, joint-sounding can include stations providing a single joint sounding report that encompasses both APs' channels. For example, when a first station is associated with a first AP and second station is associated with a second AP, the first station or the second station can each transmit a single joint-sounding report, covering the channels of both APs. Conversely, sequential-sounding entails stations delivering two individual sounding reports, one per AP. In this scenario, a station associated with either AP can transmit two separate sounding reports, one report for the downlink channel from each AP. These sounding sequences can facilitate the improvement or optimization of communication between APs and stations, thereby improving the overall efficiency and reliability of data transmission.

Examples of sounding sequences can include joint-sounding sequences or sequential-sounding sequences. For example, a first STA (e.g., STA1) can be associated with a first AP (e.g., AP1) and a second STA (e.g., STA2) can be associated with second AP (e.g.,AP2). In a joint-sounding configuration, STAs can feedback single joint sounding report, covering both APs' channels. Example options for MAC protocol sequence can include each BSS' STAs sounded separately. For example, a first MAC protocol sequence for sounding can be initiated for sounding STA1 (e.g., by AP1), and a second MAC protocol sequence can be initiated for sounding STA2 (e.g., by AP2).

For instance, a joint-sounding sequence can include a configuration, such as: AP1 NDPA (STA1), SIFS, Joint NDP (AP1+AP2), SIFS, AP1 BFRP (STA1), SIFS, STA1 BFR. In this scenario, the joint-sounding sequence can include a sequence of actions for coordinating beamforming between AP1 and AP2 and a station (STA1). The sequence can begin with AP1 initiating a null data packet announcement (NDPA) directed at STA1, followed by a short interframe space (SIFS). Then, both AP1 and AP2 can jointly transmit a null data packet (NDP), indicating their collaboration, again followed by a SIFS. Next, AP1 can send a beamforming report poll (BFRP) to STA1, allowing the STA1 to prepare for beamforming operations (e.g., communicating channel information). Finally, STA1 can respond with a beamforming report (BFR), including feedback on the measured channel-state-information (CSI) relative to AP1 and AP2.

For instance, a sequential-sounding sequence can include a scenario where STAs feedback two individual sounding reports, one per AP. Example options for MAC protocol sequence can include a single-AP sequence, with each BSS' STAs sounded separately, one AP at a time. For example, a sequential-sounding sequence configuration can include an AP1 NDPA (STA1), SIFS, AP1 NDP or AP2 NDP, SIFS, AP1 BFRP (STA1), SIFS, STA1 BFR (AP1 or AP2). In this scenario, the sequential-sounding sequence configuration can include actions facilitating beamforming between access point AP1 (and potentially AP2) and station STA1. The sequence can begin with AP1 initiating an NDPA targeted at STA1, followed by a SIFS. Subsequently, either AP1 or AP2 can transmit an NDP which can serve as part of the sounding process, followed by a SIFS. Next, AP1 can send a BFRP to STA1, allowing it to prepare for the forthcoming beamforming operations. STA1 can respond with a BFR directed either to AP1 or AP2, including feedback on the measured channel-state-information (CSI) relative to either AP1 or AP2.

For example, a sequential-sounding sequence configuration can include a multi-AP configuration with each BSS' STAs sounded separately, for both APs. For instance, the configuration can include AP1 NDPA (STA1), SIFS, AP1 NDP, SIFS, AP2 NDP, SIFS, AP1 BFRP (STA1), SIFS, STA1 BFR (AP1, AP2). In this setup, the sequential-sounding sequence can facilitate coordinated beamforming between access points AP1 and AP2 and STA1. The sequence can begin with AP1 initiating an NDPA directed at STA1, followed by SIFS. Then, AP1 can transmit an NDP, which can be followed by a second NDP transmission from AP2, with both NDPs contributing to the sounding process, followed by SIFS. Then AP1 can send a BFRP to STA1, preparing the STA1 for beamforming operations. The STA1 can respond with a BFR directed to both AP1 and AP2, including feedback on the measured channel-state-information (CSI) relative to AP1 and AP2.

In the sequences in which AP1 initiates the sounding sequence to its STAs, the AP2 can be configured to receive BFR transmission from STA1. In order for this to occur, AP2 may prepare to receive the BFR by first decoding the preceding BFRP frame transmitted by AP1, since the BFRP can include information (e.g., MCS, PPDU bandwidth, RU index, spatial stream indication) about how STA1 should encode the subsequent TB PPDU containing the BFR. The AP2 can utilize information from the preceding BFRP to decode the BFR frame transmitted by the STAs of the AP1. For example, AP2 can utilize the transmission parameters for the BFR as specified in the BFRP, such as the MCS, PPDU bandwidth, RU index or spatial stream indication for each STA of AP1 that is addressed by the BFRP
(e.g., STA1). The AP1 may include some padding at the end of the BFRP to provide AP2 sufficient time to decode the BFRP and prepare for STA1's transmission. The amount of padding may be pre-negotiated between the APs, for e.g., during the initial handshake.

Several considerations and optimizations can relate to various aspects of CBF operation. For instance, padding can be used to facilitate an efficient utilization of CBF-TXOPs, particularly in scenarios where the responding APs may not have sufficient data available for transmission to all stations. In such cases, the responding AP can fill the remaining duration of the CBF PPDU with padding bytes to maintain synchronization (e.g., manage time) and optimize resource utilization. Furthermore, negotiations regarding the MU-RTS/BSRP rate and trigger frame contents for TB-ACK are essential for optimizing communication between APs and STAs, ensuring reliable data transmission, and minimizing overhead. Additionally, considerations related to per-AP transmission power adjustments and trigger frame specifications contribute to optimizing CBF operation and enhancing network performance and reliability.

Comparing different CBF-setup frame-sequences, the sequence discussed in connection with method 800 may have a different (e.g., higher) overhead than sequences discussed in connection with method 900. For instance, sequence of method 900 with type-2 notification and type-2 response frames can utilize AP1 to select an MCS for participating STAs of AP1 without knowing which STAs of AP2 will participate. To facilitate robustness, the selected MCS may be lower than the value chosen with prior knowledge of participating STAs of AP2 (such as in method 800, or in method 900 with type-1 notification and type-1 response frames). For instance, sequence of the method 900 can have a different (e.g., lower) overhead than sequence of method 800.

Other CBF-setup/data frame-sequences can be derived from CBF-setup discussed in connection with method 700, 800 or 900. For instance, a common initial control frame can be split into individual initial control frames (MU-RTS/BSRP) per AP and merged with preceding CBF-setup frame exchange. The initial control frame transmitted by the first AP can be merged with the notification frame (for CBF-setup frame sequences of method 900) or the second notification frame (for CBF-setup frame sequence of method 800). The initial control frame transmitted by the second AP can be merged with response frame (for CBF-setup frame sequences associated with method 900) or the second response frame (for CBF-setup frame sequence associated with method 800). STAs associated to the first AP and addressed by the first AP's initial control frame can wait until after the second AP has transmitted its initial control frame, to jointly transmit a response (CTS/BSRP) to the initial control frames along with STAs associated to the second AP that are addressed by the second AP's initial control frame.

With respect to the CBF preamble, APs can agree on what common contents, data or parameters that can be signaled, such as BSS-color, TXOP duration, Bandwidth, Punctured Channel Information, SIG MCS, Spatial Reuse, GI+LTF size, Pre-FEC Padding Factor, LDPC Extra Symbol, Number of LTF symbols (including whether extra LTFs are needed), packet-extension value (T_PE), PE disambiguity, values of reserved bits, etc. Some of the common contents can be decided by prior negotiation (e.g., unchanged across multiple TXOPs, or not negotiated on a per-TXOP basis) such as one or more of: PHY Version Identifier, Pre-FEC Padding Factor (e.g., a value such as 0 to indicate padding up to full OFDM symbol boundary), TXOP duration (e.g., a value such as 127 to indicate absence of information), Spatial Reuse (e.g., a value such as 0 to indicate that spatial reuse is disallowed), LDPC Extra Symbol (e.g., a value such as 1 to indicate that LDPC extra symbol is present), BSS-color, T_PE, PE Disambiguity (e.g., a value of 1). Some other common contents such as L-SIG LENGTH field may be negotiated between the APs per-TXOP. The per-user contents for each AP can be signaled on different frequencies/tones in the preamble, such as by each AP occupying a different content channel (e.g., in the UHR-SIG).

As for the per-AP transmission power for CBF PPDU, the technical solutions can use each AP picking its transmission power based on the highest data-rate MCS used in the PPDU across STAs or clients of both APs, due to MCS-related EVM. With respect to padding, the responding-AP to a CBF-TXOP initiating-AP may not have sufficient data available to transmit for one or more of its STAs that can occupy the entire duration of the CBF PPDU. In such cases, the responding-AP may fill the remaining duration of the CBF PPDU for such STA(s) with padding bytes. The rate used to transmit the initial control frame (e.g., MU-RTS or BSRP) can be negotiated between the APs up-front (e.g., fixed basic-rate, or fixed mapping to basic-rate based on highest user-MCS), or communicated per-TXOP in AP-AP handshake. BSRP, triggered-BA trigger frame contents can include transmission power and target-RSSI settings, which can be pre-negotiated between the APs or communicated per-TXOP. The trigger frame for TB-ACK can include trigger-in-AMPDU. The trigger frame contents (RU allocation, MCS/Nss per-user) can be negotiated between the APs, either up-front or per TXOP. The MU-BAR can be handled such that each AP sequentially sends MU-BAR and collects TB-BlockACK after the CBF PPDU (e.g., the APs could indicate to the STAs that an immediate acknowledgment after the CBF PPDU may not be required, or that a delayed Block-ACK can be utilized).

For example, either AP can make use of any of the frames transmitted by the other AP to estimate or determine its own one or more relative carrier frequency offsets (CFOs) with respect to the other APs. Either AP can use this estimated or determined one or more relative CFOs to the other AP during channel sounding or data transmissions. For instance, either AP can pre-compensate or pre-correct its transmission based on the estimated or determined one or more relative CFOs to the other AP, in order to reduce the effective relative CFO of its pre-compensated or pre-corrected transmission with respect to the other AP. For instance, a CFO of a first AP can be used by the first AP (or its stations) to distinguish their transmissions when communicating to implement channel sounding or data transmissions.

In mesh deployment scenarios, the root AP and the repeater AP can engage in CBF operation. The root AP can hold data on stations associated with either root or repeater AP, including their respective traffic profiles. This data can provide additional understanding to facilitate the root AP to make informed decisions regarding CBF utilization and transmission optimization. For example, the root AP can have prior knowledge of which stations are associated with the repeater AP and their corresponding traffic profiles. Consequently, the root AP can better predict the availability of traffic for repeater-AP stations and prepare for CBF transmissions, accordingly, thereby improving overall network efficiency and performance. Additionally, in mesh deployments, the transfer of station information between the repeater AP and the root AP may be optimized to minimize overhead and streamline communication. By leveraging its advanced knowledge and predictive capabilities, the root AP can effectively optimize CBF operation.

For instance, in mesh deployments, the root AP may be aware a-priori of STAs associated with the repeater AP, as well as their traffic-profile. The root-AP may be aware of which STAs of the repeater AP may be serviced subsequently, since any downlink traffic intended for such STAs can be conveyed to the repeater from the same router that also hosts the root AP. In such cases, the solutions can limit the transfer of STA information from the repeater-AP to the root-AP, for e.g., it could be relatively infrequent in comparison with transfer from root-AP to repeater-AP. In addition, the root-AP may be able to better predict the availability of traffic for repeater-AP STAs and prepare for the CBF transmissions in advance.

This may be reflected in a better prediction by the root-AP of when a TXOP is most likely to utilize CBF, such as if initiated, for e.g., based on consideration of the amount and timing of traffic delivery to the repeater-AP (for its STAs). For instance, this can result in a better choice of candidate STA-groups when the CBF-TXOP is initiated by the root-AP with CBF-setup sequence associated with method 900 utilizing type-1 notification. For instance, CBF-setup sequence associated with method 900 may be further simplified by not providing or using a response from the repeater-AP. For instance, a better prediction of MCS for the root-AP's STAs can be provided when CBF-TXOP is initiated by the root-AP with CBF-setup sequence associated with method 900 utilizing type-2 notification. In this scenario, CBF-setup sequence associated with method 900 may be further simplified by not using a response from the repeater-AP, for e.g., if root-AP has prior knowledge of which STAs will be selected by the repeater-AP, their MCS, etc. For example, a better choice of TXOP duration can be provided when CBF-TXOP is initiated by the root-AP, for e.g., due to consideration of the amount of traffic for different STAs that is pending transmission at the repeater-AP.

If the CBF-TXOP is initiated by the repeater, it may do one or more of the following to reduce overhead. For instance, it may reduce the amount of padding in notification frames sent to the root-AP, since the root-AP may need lesser time (for e.g., than the repeater) to prepare for a response or for CBF data transmission. For instance, it may merely perform a TXOP-handover to the root-AP without communicating any information about the repeater's STAs with traffic (since the root-AP may have prior knowledge of this).

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed, and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A system comprising:
a first access point, AP, (205) configured to:
transmit, to a second AP (205) that is capable of participating in coordinated beamforming, CBF, a first notification frame comprising a first set of stations (230) to participate in a CBF transmission;
receive, from the second AP (205), responsive to the first notification frame, a first response frame comprising a second set of stations (230) to participate in the CBF transmission; and
transmit data in the CBF transmission to at least one station of the first set of stations (230) or the second set of stations (230), responsive to the first response frame.

2. The system of claim 1, wherein the first AP (205) is further configured to:
transmit, to the second AP (205), a second notification frame comprising information of the first set of stations (230) for constructing a preamble of the CBF physical-layer protocol data unit, PPDU; and
receive, from the second AP (205), responsive to the second notification frame, a second response frame comprising information of the second set of stations (230) to construct the preamble of the CBF PPDU to use for the CBF transmission.

3. The system of claim 2, wherein the first AP (205) is further configured to construct the preamble of the CBF PPDU using the information of the first set of stations (230) and the information of the second set of stations (230), wherein the first AP (205) is further configured to transmit the CBF transmission comprising the preamble of the CBF PPDU.

4. The system of any of claims 1 to 3, comprising the first AP (205) configured to:
identify at least one of downlink channel-state information, CSI, reported by one or more stations of the first AP (205) or data traffic of the first AP (205) for transmission to one or more stations of the first AP (205); and
select, based on the identification, the first set of stations (230), wherein the second set of stations (230) of the first response frame is selected based on at least one of a downlink channel-state information, CSI, reported by stations of the second set of stations (230) or data traffic of the second AP (205) pending for transmission.

5. The system of any of claims 1 to 4, comprising the first AP (205) configured to:
implement a channel sounding sequence with a plurality of stations associated with the first AP (205);
select, responsive to the channel sounding sequence, from the plurality of stations, the first set of stations (230), wherein the second set of stations (230) is selected from a plurality of stations associated with the second AP (205) based on one or more channel sounding sequences implemented by the second AP (205) with the plurality of stations associated with the second AP (205).

6. The system of any of claims 1 to 5, comprising at least one of the following features:
i) comprising the first AP (205) configured to:
generate a first list identifying at least one of the stations of a first set of candidate stations of the first AP (205) or a list of station groups constructed from at least one of a first set of candidate stations of the first AP (205) or a second set of candidate stations of the second AP (205); and
insert the first list into the first notification frame to indicate the first set of stations (230);
ii) comprising the first AP (205) configured to:
insert, in the first notification frame, a first information for constructing a preamble for the CBF transmission;
receive, via the first response frame, a second information for constructing the preamble for the CBF transmission; and
construct the preamble for the CBF transmission using at least the first information or the second information.

7. The system of claim 5 or 6, wherein the one or more channel sounding sequences include at least one of a joint-sounding sequence or a sequential-sounding sequence.

8. The system of any of claims 2 to 7, comprising the first AP (205) configured to identify the information of the first set of stations (230) that comprises at least one of: a parameter for a modulation and coding scheme, MCS, of at least a station of the first set of stations (230), a duration of a CBF PPDU, a parameter for a guard interval and long training field, GI-LTF, a number of long training fields, LTFs, information on fields of the first set of stations (230) for the first AP (205), or a duration of a CBF transmission opportunity, CBF TXOP.

9. The system of any of claims 1 to 8, wherein the CBF transmission is configured for transmission in accordance with a CBF transmission opportunity, TXOP, having a predetermined time interval, the first AP (205) configured to transmit, to the second AP (205), information about the predetermined time interval of the CBF TXOP.

10. A method comprising:
transmitting, by a first access point, AP, (205) to a second AP (205) that is capable of participating in coordinated beamforming, CBF, a first notification frame comprising a first set of stations (230) to participate in a CBF transmission;
receiving, by the first AP (205) from the second AP (205), responsive to the first notification frame, a first response frame comprising a second set of stations (230) to participate in the CBF transmission; and
transmitting, by the first AP (205), data in the CBF transmission to at least one station of the first set of stations (230) or the second set of stations (230), responsive to the first response frame.

11. The method of claim 10, comprising:
transmitting, by the first AP (205) to the second AP (205), a second notification frame comprising information of the first set of stations (230) for constructing a preamble of the CBF physical-layer protocol data unit, PPDU; and
receiving, by the first AP (205) from the second AP (205), responsive to the second notification frame, a second response frame comprising information of the second set of stations (230) to construct the preamble of the CBF PPDU to use for the CBF transmission;
in particular comprising:
constructing, by the first AP (205), the preamble of the CBF PPDU using the information of the first set of stations (230) and the information of the second set of stations (230); and
transmitting, by the first AP (205), the CBF transmission comprising the preamble of the CBF PPDU.

12. The method of claim 10 or 11, comprising:
identifying, by the first AP (205), at least one of downlink channel-state information, CSI, reported by one or more stations of the first AP (205) or data traffic of the first AP (205) for transmission to one or more stations of the first AP (205); and
selecting, based on the identification, the first set of stations (230), wherein the second set of stations (230) of the first response frame is selected based on at least one of a downlink channel-state information, CSI, reported by stations of the second set of stations (230) or data traffic of the second AP (205) pending for transmission.

13. The method of any of claims 10 to 12, comprising at least one of the following features:
i) comprising:
implementing, by the first AP (205), a channel sounding sequence with a plurality of stations associated with the first AP (205);
selecting, by the first AP (205), responsive to the channel sounding sequence, from the plurality of stations, the first set of stations (230), wherein the second set of stations (230) is selected from a plurality of stations associated with the second AP (205) based on one or more channel sounding sequences implemented by the second AP (205) with the plurality of stations associated with the second AP (205);
ii) comprising:
generating, by the first AP (205), a first list identifying at least one of the stations of a first set of candidate stations of the first AP (205) or a list of station groups constructed from at least one of a first set of candidate stations of the first AP (205) or a second set of candidate stations of the second AP (205); and
inserting, by the first AP (205), the first list into the first notification frame to indicate the first set of stations (230);
iii) comprising:
inserting, by the first AP (205), in the first notification frame, a first information for constructing a preamble for the CBF transmission;
receiving, by the first AP (205), via the first response frame, a second information for constructing the preamble for the CBF transmission; and
constructing, by the first AP (205), the preamble for the CBF transmission using at least the first information or the second information;
iv) wherein the one or more channel sounding sequences include at least one of a joint-sounding sequence or a sequential-sounding sequence.

14. The method of any of claims 11 to 13, comprising:
identifying, by the first AP (205), the information of the first set of stations (230), the information of the first set of stations (230) comprising at least one of: a parameter for a modulation and coding scheme, MCS, of at least a station of the first set of stations (230), a duration of a CBF PPDU, a parameter for a guard interval and long training field, GI-LTF, a number of long training fields, LTFs, information on fields of the first set of stations (230) for the first AP (205), or a duration of a CBF transmission opportunity, CBF TXOP.

15. A system, comprising:
a second access point, AP, (205) configured to:
receive, from a first AP (205) that is capable of participating in coordinated beamforming, CBF, a first notification frame comprising a first set of stations (230) to participate in a CBF transmission;
transmit, to the first AP (205), responsive to the first notification frame, a first response frame comprising a second set of stations (230) to participate in the CBF transmission; and
transmit data in the CBF transmission to at least one station of the first set of stations (230) or the second set of stations (230), responsive to the first response frame.
